# EUROPÄISCHE PATENTSCHRIFT

(11) **EP 2 745 992 B1**
(45) Veröffentlichungstag und Bekanntmachung des Hinweises auf die Patenterteilung: **05.08.2020**
(21) Anmeldenummer: 13182913.7
(22) Anmeldetag: 04.09.2013
(51) Int. Cl.: B25F 3/00

(54) **Werkzeugvorsatz für eine Handwerkzeugmaschine**
Tool attachment for a manual tool machine
Ensemble d'outils pour une machine-outil manuelle

(30) Priorität: 22.11.2012 DE 102012221320; 15.07.2013 DE 102013213804
(43) Veröffentlichungstag der Anmeldung: 25.06.2014
(73) Patentinhaber: Robert Bosch GmbH, 70442 Stuttgart (DE)
(72) Erfinder: Tussing, Torsten, 73257 Koengen (DE)

(56) Entgegenhaltungen:
- WO-A1-2008/068100
- DE-A1- 2 227 032
- US-A1- 2005 127 618

## Beschreibung

### Stand der Technik

Die vorliegende Erfindung betrifft einen Werkzeugvorsatz zur Befestigung an einer Befestigungsschnittstelle einer Handwerkzeugmaschine, mit einer Verriegelungseinheit, die in einem Entriegelungszustand ein Aufsetzen des Werkzeugvorsatzes auf die Befestigungsschnittstelle der Handwerkzeugmaschine ermöglicht und in einem Verriegelungszustand eine Verriegelung des Werkzeugvorsatzes an der Befestigungsschnittstelle der Handwerkzeugmaschine zum Betrieb ermöglicht, wobei die Verriegelungseinheit einen drehbeweglichen Verriegelungskörper aufweist, der im Entriegelungszustand in einer ersten Drehstellung und im Verriegelungszustand in einer zweiten Drehstellung an der Befestigungsschnittstelle der Handwerkzeugmaschine angeordnet ist.

Aus dem Stand der Technik ist ein derartiger Werkzeugvorsatz bekannt, der zur Befestigung an einer Befestigungsschnittstelle einer Handwerkzeugmaschine eine Verriegelungseinheit aufweist. Diese Verriegelungseinheit dient zur Verriegelung des Werkzeugvorsatzes an der Handwerkzeugmaschine in einem zugeordneten Verriegelungszustand, um einen Betrieb des Werkzeugvorsatzes an der Handwerkzeugmaschine durch eine Übertragung eins Antriebsdrehmoments von der Handwerkzeugmaschine auf den Werkzeugvorsatz zu ermöglichen. Hierzu weist die Verriegelungseinheit einen drehbeweglichen Verriegelungskörper auf, an dem nach Art von Bajonetten ausgebildete Verriegelungselemente zur Ausbildung einer Bajonett-Verbindung mit der Befestigungsschnittstelle der Handwerkzeugmaschine vorgesehen sind.

Nachteilig am Stand der Technik ist, dass eine derartige Bajonett-Verbindung sich aufgrund von im Betrieb der Handwerkzeugmaschine auftretenden Vibrationen selbsttätig lösen kann. Dies kann zu Schäden am Werkzeugvorsatz und/oder der Handwerkzeugmaschine sowie zu Verletzungen eines Benutzers der Handwerkzeugmaschine führen. Ein Werkzeugvorsatz ist auch aus US-A-2005/0127618, DE-A-22 27 032, und WO-A-2008/068100 bekannt.

### Offenbarung der Erfindung

Eine Aufgabe der Erfindung ist es daher, einen neuen Werkzeugvorsatz zur Befestigung an einer Befestigungsschnittstelle einer Handwerkzeugmaschine bereitzustellen, bei dem nach einer Verriegelung an der Befestigungsschnittstelle der Handwerkzeugmaschine ein selbsttätiges Lösen hiervon verhindert werden kann.

Dieses Problem wird gelöst durch einen Werkzeugvorsatz nach Anspruch 1.

Die Erfindung ermöglicht somit die Bereitstellung eines Werkzeugvorsatzes, bei dem im Betrieb einer zugeordneten Handwerkzeugmaschine, an der der Werkzeugvorsatz im Verriegelungszustand verriegelt ist, ein selbsttätiges Lösen des Verriegelungskörpers des Werkzeugvorsatzes von der Befestigungsschnittstelle der Handwerkzeugmaschine durch das Sperrglied sicher und zuverlässig verhindert werden kann.

Gemäß einer Ausführungsform ist das Sperrglied dazu ausgebildet, im Verriegelungszustand mit einem der Befestigungsschnittstelle der Handwerkzeugmaschine zugeordneten Sperrelement zusammenzuwirken.

Somit kann auf einfache Art und Weise eine stabile und robuste Sperranordnung bereitgestellt werden.

Das Sperrelement weist bevorzugt mindestens eine Sperrverzahnung auf.

Somit kann ein schnell und unkompliziert herstellbares Sperrelement bereitgestellt werden.

Gemäß einer Ausführungsform ist das Sperrglied zumindest bereichsweise federnd ausgebildet und weist zumindest einen Sperrabschnitt auf, der im Verriegelungszustand durch eine elastische Verformung des Sperrglieds gegen die Befestigungsschnittstelle der Handwerkzeugmaschine beaufschlagt ist.

Die Erfindung ermöglicht somit die Bereitstellung eines betriebssicheren und kostengünstigen Sperrglieds.

Bevorzugt ist der Sperrabschnitt dazu ausgebildet, im Verriegelungszustand in die Sperrverzahnung einzurasten, um die Verdrehung des Verriegelungskörpers von der zweiten Drehstellung in die erste Drehstellung zu verhindern.

Somit kann eine sichere und robuste Sperrung einer selbsttätigen Verdrehung des Verriegelungskörpers im Verriegelungszustand der Verriegelungseinheit ermöglicht werden.

Die Verriegelungseinheit weist ein Betätigungselement auf, das dazu ausgebildet ist, eine Verdrehung des Verriegelungskörpers von der ersten in die zweite Drehstellung zu ermöglichen.

Die Erfindung ermöglicht somit die Bereitstellung eines Werkzeugvorsatzes, dessen Verriegelungseinheit für eine einfache und benutzerfreundliche Handhabbarkeit ausgelegt ist.

Der Verriegelungskörper ist bevorzugt zumindest abschnittsweise rohrförmig ausgebildet und das Betätigungselement ist drehbeweglich am Außenumfang des Verriegelungskörpers gelagert.

Somit kann eine stabile und unkomplizierte Lagerung des Betätigungselements am Verriegelungskörper ermöglicht werden.

Gemäß einer Ausführungsform sind am Betätigungselement mindestens ein Mitnehmerelement und am Verriegelungskörper mindestens ein Mitnahmeglied ausgebildet, wobei das Mitnehmerelement und das Mitnahmeglied dazu ausgebildet sind, bei einer Betätigung des Betätigungselements zur Verdrehung des Verriegelungskörpers von der ersten in die zweite Drehstellung zur Drehmitnahme des Verriegelungskörpers zusammenzuwirken.

Die Erfindung ermöglicht somit die Bereitstellung eines Werkzeugvorsatzes, bei dem eine sichere und zuverlässige Drehmitnahme des Verriegelungskörpers durch das Betätigungselement gewährleistet werden kann.

Bevorzugt ist das Mitnahmeglied dazu ausgebildet, eine Drehbewegung des Betätigungselements relativ zum Verriegelungskörper zumindest um einen vorgegebenen Drehwinkel zu ermöglichen.

Somit kann eine Relativbewegung zwischen Betätigungselement und Verriegelungskörper ermöglicht werden, die erfindungsgemäß zur Aktivierung oder Deaktivierung des Sperrglieds Anwendung findet.

Das Betätigungselement ist bevorzugt dazu ausgebildet, das Sperrglied im Verriegelungszustand zumindest abschnittsweise gegen die Befestigungsschnittstelle der Handwerkzeugmaschine zu beaufschlagen.

Somit kann die Sperrfunktion des Sperrglieds im Verriegelungszustand der Verriegelungseinheit durch das Betätigungselement wirksam aufrechterhalten werden.

Bevorzugt weist das Betätigungselement eine Steuerkurve auf, die dazu ausgebildet ist, im Verriegelungszustand die zumindest abschnittsweise Beaufschlagung des Sperrglieds gegen die Befestigungsschnittstelle der Handwerkzeugmaschine zu ermöglichen.

Somit kann auf einfache Art und Weise eine stabile Beaufschlagung des Sperrglieds im Verriegelungszustand der Verriegelungseinheit ermöglicht werden.

Das Betätigungselement ist ein Blockierglied zugeordnet, das dazu ausgebildet ist, das Betätigungselement im Verriegelungszustand in einer Blockierstellung am Verriegelungskörper zu blockieren, in der das Betätigungselement das Sperrglied zumindest abschnittsweise gegen die Befestigungsschnittstelle der Handwerkzeugmaschine beaufschlagt.

Die Erfindung ermöglicht somit die Bereitstellung eines Werkzeugvorsatzes, bei dem das Betätigungselement bei einer Beaufschlagung des Sperrglieds sicher und zuverlässig am Verriegelungskörper blockierbar ist.

Das Blockierglied ist zumindest bereichsweise federnd ausgebildet und weist einen Blockierabschnitt auf, der in der Blockierstellung in einem am Verriegelungskörper vorgesehenen Fixierglied lösbar fixierbar ist.

Somit kann ein robustes und kostengünstiges Blockierglied bereitgestellt werden.

Bevorzugt ist das Fixierglied nach Art einer Ausnehmung ausgebildet und der Blockierabschnitt ist dazu ausgebildet, in der Blockierstellung in dem Fixierglied einzurasten, um im Verriegelungszustand eine selbsttätige Verdrehung des Betätigungselements relativ zum Verriegelungskörper zu verhindern.

Somit kann eine betriebssichere und zuverlässige Verrastung des Betätigungselements am Verriegelungskörpers ermöglicht werden.

Das Sperrglied und das Blockierglied sind bevorzugt einstückig ausgebildet.

Somit kann zur Realisierung des Sperrglieds und des Blockierglieds ein einfaches und kostengünstiges, einzelnes Bauteil Anwendung finden.

Gemäß einer Ausführungsform weist der Verriegelungskörper Verriegelungselemente auf, die nach Art von Bajonetten zur Ausbildung einer Bajonett-Verbindung mit der Befestigungsschnittstelle der Handwerkzeugmaschine ausgebildet sind.

Die Erfindung ermöglicht somit die Bereitstellung eines Werkzeugvorsatzes, der über eine robuste und stabile Bajonett-Verbindung sicher und zuverlässig mit der Befestigungsschnittstelle der Handwerkzeugmaschine verbindbar ist.

Das Eingangs genannte Problem wird auch gelöst durch eine Handwerkzeugmaschine mit einer Befestigungsschnittstelle zur Befestigung eines Werkzeugvorsatzes, der einen an der Befestigungsschnittstelle verriegelbaren Verriegelungskörper aufweist. Der Befestigungsschnittstelle ist ein Sperrelement zugeordnet, das zur Sperrung einer verdrehgesicherten Verriegelung des Verriegelungskörpers des Werkzeugvorsatzes an der Befestigungsschnittstelle ausgebildet ist.

Darüber hinaus wird das Eingangs genannte Problem auch gelöst durch ein Werkzeugsystem mit einer Handwerkzeugmaschine, die eine Befestigungsschnittstelle aufweist, und mit einem Werkzeugvorsatz zur Befestigung an der Befestigungsschnittstelle der Handwerkzeugmaschine. Der Werkzeugvorsatz weist eine Verriegelungseinheit auf, die in einem Entriegelungszustand ein Aufsetzen des Werkzeugvorsatzes auf die Befestigungsschnittstelle der Handwerkzeugmaschine ermöglicht und in einem Verriegelungszustand eine Verriegelung des Werkzeugvorsatzes an der Befestigungsschnittstelle der Handwerkzeugmaschine zum Betrieb ermöglicht. Die Verriegelungseinheit weist einen drehbeweglichen Verriegelungskörper auf, der im Entriegelungszustand in einer ersten Drehstellung und im Verriegelungszustand in einer zweiten Drehstellung an der Befestigungsschnittstelle der Handwerkzeugmaschine angeordnet ist. Die Verriegelungseinheit weist ein Sperrglied auf, das dazu ausgebildet ist, im Verriegelungszustand eine Verdrehung des Verriegelungskörpers von der zweiten Drehstellung in die erste Drehstellung zu verhindern.

Des Weiteren wird das Eingangs genannte Problem auch gelöst durch eine Handwerkzeugmaschine mit einer Befestigungsschnittstelle zur verdrehgesicherten Befestigung eines Werkzeugvorsatzes, wobei die Befestigungsschnittstelle an einem Getriebegehäuse der Handwerkzeugmaschine befestigt ist.

Die Erfindung ermöglicht somit die Bereitstellung einer Handwerkzeugmaschine mit kompaktem und robustem Aufbau.

Bevorzugt weist die Handwerkzeugmaschine eine Werkzeugaufnahme zur Aufnahme eines Einsatzwerkzeugs auf, die eine federbeaufschlagte Verriegelungshülse zur Verriegelung des Einsatzwerkzeugs aufweist, wobei die Verriegelungshülse zumindest abschnittsweise in die Befestigungsschnittstelle einschiebbar ist.

Somit kann eine Handwerkzeugmaschine mit verkürzter Baulänge bereitgestellt werden.

Bevorzugt ist die Befestigungsschnittstelle dazu ausgebildet, eine in einer vorgegebenen Winkelposition ausgerichtete Befestigung des Werkzeugvorsatzes am Getriebegehäuse zu ermöglichen.

Somit kann auf einfache Art und Weise eine anwendungsspezifische Ausrichtung des Werkzeugvorsatzes an der Handwerkzeugmaschine ermöglicht werden.

Bevorzugt ist an der Befestigungsschnittstelle eine zumindest abschnittsweise konusförmige Zentrierhilfe zur axialen Zentrierung des Werkzeugvorsatzes vorgesehen.

Somit kann eine stabile und zuverlässige axiale Zentrierung des Werkzeugvorsatzes an der Handwerkzeugmaschine ermöglicht werden.

Bevorzugt ist der Befestigungsschnittstelle ein Sperrelement zugeordnet, das zur Sperrung einer verdrehgesicherten Verriegelung eines an der Befestigungsschnittstelle verriegelbaren Verriegelungskörpers des Werkzeugvorsatzes an der Befestigungsschnittstelle ausgebildet ist.

Somit kann ein selbsttätiges Lösen des Verriegelungskörpers des Werkzeugvorsatzes von der Befestigungsschnittstelle der Handwerkzeugmaschine in deren Betrieb durch das Sperrglied sicher und zuverlässig verhindert werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine schematische Ansicht einer Handwerkzeugmaschine mit einer Werkzeugaufnahme und einer Befestigungsschnittstelle gemäß einer Ausführungsform,
Fig. 2 eine Schnittansicht eines an der Befestigungsschnittstelle der Handwerkzeugmaschine von Fig. 1 befestigbaren Werkzeugvorsatzes mit einem Verriegelungskörper und einem Betätigungselement gemäß einer Ausführungsform,
Fig. 3 eine perspektivische Ansicht des Verriegelungskörpers von Fig. 2,
Fig. 4 eine perspektivische Ansicht des Verriegelungskörpers von Fig. 3 mit einem Sperrglied gemäß einer Ausführungsform,
Fig. 5 eine perspektivische Ansicht des Verriegelungskörpers von Fig. 4 mit einem Blockierglied gemäß einer Ausführungsform,
Fig. 6 eine perspektivische Ansicht des Betätigungselements von Fig. 2 gemäß einer Ausführungsform, mit dem Sperrglied von Fig. 4 und dem Blockierglied von Fig. 5,
Fig. 7 eine perspektivische Ansicht des Betätigungselements von Fig. 6,
Fig. 8 eine perspektivische Ansicht des Betätigungselements von Fig. 6, ohne das Sperrglied von Fig. 4,
Fig. 9 eine Schnittansicht des an dem Verriegelungskörper von Fig. 2 gelagerten Betätigungselements von Fig. 2,
Fig. 10 eine Schnittansicht eines Werkzeugsystems gemäß einer Ausführungsform, mit dem auf die Handwerkzeugmaschine von Fig. 1 aufgesetzten Werkzeugvorsatz von Fig. 2,
Fig. 11 eine Schnittansicht des Werkzeugsystems von Fig. 10 beim Verriegeln des Werkzeugvorsatzes an der Handwerkzeugmaschine,
Fig. 12 eine Schnittansicht eines Werkzeugsystems gemäß einer Ausführungsform, mit dem auf die Handwerkzeugmaschine von Fig. 1 aufgesetzten Werkzeugvorsatz von Fig. 2, der eine gemäß einer alternativen Ausführungsform ausgebildete Verriegelungseinheit aufweist,
Fig. 13 eine Schnittansicht eines Werkzeugvorsatzes gemäß einer alternativen Ausführungsform mit einer Befestigungsschnittstelle zur Befestigung an der Handwerkzeugmaschine von Fig. 1, und
Fig. 14 eine Schnittansicht eines Werkzeugsystems gemäß einer alternativen Ausführungsform mit dem an der Handwerkzeugmaschine von Fig. 1 befestigten Werkzeugvorsatz von Fig. 13.

### Beschreibung der Ausführungsbeispiele

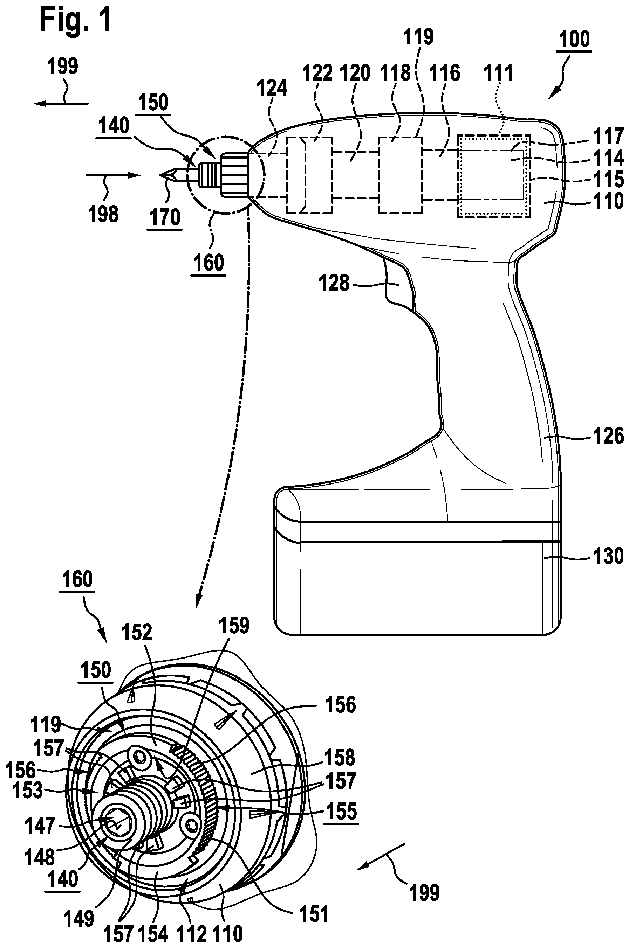

Fig. 1 zeigt eine mit einer Werkzeugaufnahme 140 versehene Handwerkzeugmaschine 100, die ein Gehäuse 110 mit einem Handgriff 126 aufweist, sowie einen vergrößerten Ausschnitt der Handwerkzeugmaschine 100. Gemäß einer Ausführungsform ist die Handwerkzeugmaschine 100 zur netzunabhängigen Stromversorgung mechanisch und elektrisch mit einem Akkupack 130 verbindbar.

Die Handwerkzeugmaschine 100 ist beispielhaft als Akku-Drehschlagschrauber ausgebildet. Es wird jedoch darauf hingewiesen, dass die vorliegende Erfindung nicht auf Akku-Drehschlagschrauber beschränkt ist, sondern vielmehr bei unterschiedlichen Handwerkzeugmaschinen Anwendung finden kann, die eine der Werkzeugaufnahme 140 entsprechende Werkzeugaufnahme aufweisen, unabhängig davon, ob die Handwerkzeugmaschine elektrisch, d.h. netzunabhängig mit dem Akkupack 130 oder netzabhängig, und/oder nicht-elektrisch betreibbar ist.

In dem Gehäuse 110 sind ein von dem Akkupack 130 mit Strom versorgter, elektrischer Antriebsmotor 114, ein Getriebe 118 und ein optionales Schlagwerk 122 angeordnet. Der Antriebsmotor 114 ist z.B. über einen Handschalter 128 betätigbar, d. h. ein- und ausschaltbar, und vorzugsweise derart elektronisch steuer- bzw. regelbar, dass sowohl ein Reversierbetrieb, als auch Vorgaben hinsichtlich einer gewünschten Drehgeschwindigkeit realisierbar sind.

Gemäß einer Ausführungsform ist der Antriebsmotor 114 ein elektronisch kommutierter Antriebsmotor, vorzugsweise ein Gleichstrommotor, der illustrativ Stator- und Rotorkomponenten 111 bzw. 117 aufweist. Hierbei bilden die Statorkomponenten 111 beispielhaft einen Außenstator aus und die Rotorkomponenten 117 beispielhaft einen Innenrotor. Es wird jedoch darauf hingewiesen, dass die Beschreibung eines nach Art eines elektronisch kommutierten Antriebsmotors mit Außenstator und Innenrotor ausgebildeten Antriebsmotors lediglich beispielhaften Charakter hat und nicht als Einschränkung der Erfindung zu verstehen ist, die auch bei einem Antriebsmotor mit Innenstator und Außenrotor oder z.B. bei einem bürstenbehafteten Kommutatormotor Anwendung finden kann.

Der Antriebsmotor 114 ist über eine zugeordnete Motorwelle 116 mit dem Getriebe 118 verbunden, das eine Drehung der Motorwelle 116 in eine Drehung eines zwischen Getriebe 118 und Schlagwerk 122 vorgesehenen Antriebsglieds 120, z.B. einer Antriebswelle, umwandelt. Diese Umwandlung erfolgt bevorzugt derart, dass das Antriebsglied 120 sich relativ zur Motorwelle 116 mit vergrößertem Drehmoment, aber verringerter Drehgeschwindigkeit dreht. Der Antriebsmotor 114 ist illustrativ in einem Motorgehäuse 115 angeordnet und das Getriebe 118 in einem Getriebegehäuse 119, wobei das Getriebegehäuse 119 und das Motorgehäuse 115 beispielhaft in dem Gehäuse 110 angeordnet sind.

Das mit dem Antriebsglied 120 verbundene, optionale Schlagwerk 122 ist beispielhaft ein Dreh- bzw. Rotationsschlagwerk, das schlagartige Drehimpulse mit hoher Intensität erzeugt und auf eine Abtriebswelle 124, z.B. eine Abtriebsspindel, überträgt. Ein beispielhaftes Schlagwerk, mit dem das Schlagwerk 122 realisiert werden kann, ist in der DE 20 2006 014 850 U1 beschrieben, auf die hier ausdrücklich Bezug genommen wird und deren Lehren als ein Teil der vorliegenden Beschreibung zu verstehen sind, sodass hier zwecks Knappheit der Beschreibung auf eine eingehende Beschreibung des Schlagwerks 122 verzichtet werden kann.

An der Abtriebswelle 124 ist die Werkzeugaufnahme 140 ausgebildet, die illustrativ einen Aufnahmekörper 147 mit Innenmehrkant-Aufnahme 148 aufweist, die zur Aufnahme von Einsatzwerkzeugen mit Außenmehrkant-Kupplungen vorgesehen ist. Am Außenumfang des z. B. drehfest und/oder einstückig mit der Abtriebswelle 124 verbundenen Aufnahmekörpers 147 ist beispielhaft eine von einem Federelement in eine von der Handwerkzeugmaschine 100 wegweisende axiale Richtung 199 federbeaufschlagte Verriegelungshülse 149 zur Verriegelung geeigneter Einsatzwerkzeuge in der Innenmehrkant-Aufnahme 148 angeordnet.

Die Werkzeugaufnahme 140 ist beispielhaft nach Art eines Bithalters ausgebildet, d.h. zur Aufnahme eines nach Art eines Schrauberbits ausgebildeten Einsatzwerkzeugs 170, das in Richtung der Handwerkzeugmaschine 100, wie mit einem Pfeil 198 angedeutet, in die Innenmehrkant-Aufnahme 148 eingeschoben wird. Ein derartiger Schrauberbit, der z.B. vom sogenannten HEX-Typ ist, ist hinreichend aus dem Stand der Technik bekannt, sodass hier zwecks Knappheit der Beschreibung auf eine eingehende Beschreibung verzichtet wird. Es wird jedoch darauf hingewiesen, dass die vorliegende Erfindung nicht auf eine Verwendung von HEX-Schrauberbits beschränkt ist, sondern auch weitere Einsatzwerkzeuge in Abhängigkeit von einer jeweils gewählten Ausgestaltung der Werkzeugaufnahme 140, z.B. HEX-Bohrer oder sogenannte SDS-Quick-Einsatzwerkzeuge, Anwendung finden können. Darüber hinaus wird darauf hingewiesen, dass auch der Aufbau und die Funktionsweise eines geeigneten Bithalters dem Fachmann hinreichend bekannt sind, sodass hier zwecks Knappheit der Beschreibung auf eine eingehende Beschreibung des Bithalters 140 verzichtet werden kann.

Gemäß einer Ausführungsform ist der Handwerkzeugmaschine 100 eine Befestigungsschnittstelle 150 zugeordnet, die illustrativ im Bereich des Bithalters 140 am Gehäuse 110 axial und radial unbeweglich befestigt ist und nachfolgend zwecks Klarheit der Beschreibung als die "Maschinenschnittstelle 150" bezeichnet wird. Es wird jedoch darauf hingewiesen, dass die Maschinenschnittstelle 150 lediglich beispielhaft als ein separates Bauteil ausgebildet ist und alternativ hierzu auch einstückig mit dem Gehäuse 110 ausgebildet sein kann.

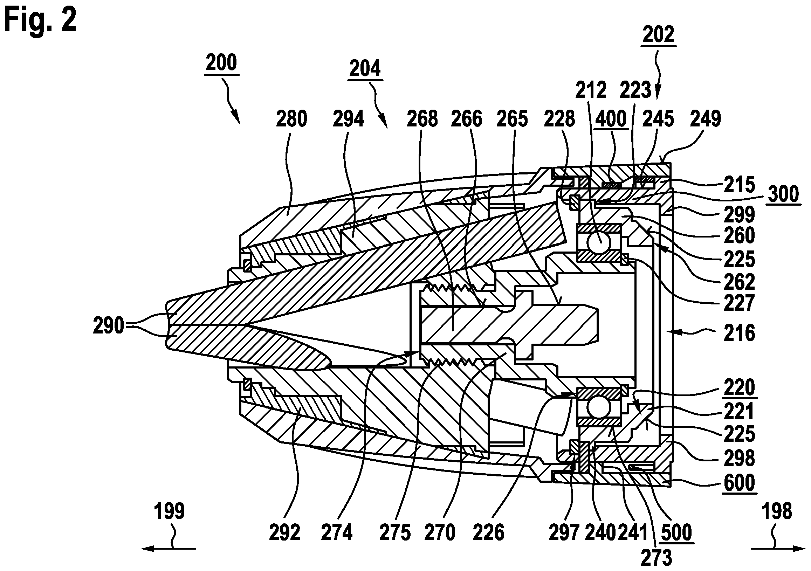

Die Maschinenschnittstelle 150 dient zur verdrehgesicherten Befestigung eines zugeordneten Werkzeugvorsatzes (200 in Fig. 2), der z.B. nach Art eines Bohrfutter-, Winkel- oder Exzentervorsatzes ausgebildet sein kann. Illustrativ weist die Maschinenschnittstelle 150 ein an einer Stirnseite 112 des Gehäuses 110 verdrehgesichert befestigtes Befestigungselement 151 auf. Dieses ist beispielhaft zumindest abschnittsweise hülsen- bzw. ringförmig ausgebildet und im Bereich einer an der Stirnseite 112 am Gehäuse 110 ringförmig angeordneten Abschluss- bzw. Schutzhülse 158 mit geeigneten Befestigungsgliedern, z.B. Schrauben oder Nieten, befestigt, kann alternativ hierzu aber auch einstückig mit dem Gehäuse 110 ausgebildet sein. Das Befestigungselement 151 ummantelt den Bithalter 140 bevorzugt zumindest abschnittsweise mit einer vorgegebenen radialen Beabstandung, um eine axiale Verschiebung der Verriegelungshülse 149 des Bithalters 140 im Inneren des Befestigungselements 151 zu ermöglichen.

Gemäß einer Ausführungsform weist das Befestigungselement 151 an seinem Außenumfang zumindest ein Sperrelement 155 und mindestens zwei Halteglieder 152, 154 auf. Das Sperrelement 155 weist bevorzugt mindestens eine Sperrverzahnung 156 auf und die mindestens zwei Halteglieder 152, 154 sind beispielhaft nach Art von Bajonetten zur Ausbildung einer Bajonett-Verbindung ausgebildet. Es wird jedoch hingewiesen, dass die Beschreibung einer derartigen Bajonett-Verbindung lediglich beispielhaften Charakter hat und nicht als Einschränkung der Erfindung dient. Vielmehr können auch alternative Befestigungsmöglichkeiten bei der Maschinenschnittstelle 150 Anwendung finden, bei denen ein entsprechender Werkzeugvorsatz (200 in Fig. 2) über eine Drehbewegung an der Maschinenschnittstelle 150 befestigbar ist, z.B. eine sogenannte Drahtbügelverriegelung usw.

Illustrativ ist an der Maschinenschnittstelle 150 eine zumindest abschnittsweise konusförmige Zentrierhilfe 153 zur axialen Zentrierung einer Verriegelungseinheit (202 in Fig. 2) eines zugeordneten Werkzeugvorsatzes (200 in Fig. 2) vorgesehen, wobei das Befestigungselement 151 dazu ausgebildet ist, die axiale Zentrierung des zugeordneten Werkzeugvorsatzes (200 in Fig. 2) an dem Gehäuse 110 zu ermöglichen. Hierzu ist am Innenumfang des Befestigungselements 151 eine beispielhaft ringförmige, zumindest abschnittsweise trichterförmige Zentrierfläche 159 zur Ausbildung der Zentrierhilfe 153 vorgesehen.

Es wird jedoch darauf hingewiesen, dass die Zentrierfläche 159 nur beispielhaft trichterförmig ausgebildet ist und nicht als Einschränkung der Erfindung. Vielmehr ist auch eine kegelförmige Ausgestaltung an einem zusätzlichen Zentrierring realisierbar. Dementsprechend repräsentiert eine Bezugnahme auf den Term "konusförmig" im Kontext der vorliegenden Erfindung sowohl eine Bezugnahme auf eine kegelförmige, als auch auf eine trichterförmige Ausgestaltung eines entsprechenden Bauteils. Darüber hinaus kann die Zentrierhilfe 153 anstelle einer einzelnen ring- und trichterförmigen Zentrierfläche 159 mehrere konusförmige Bogenabschnitte aufweisen, usw.

Des Weiteren weist das Befestigungselement 151 mindestens ein und beispielhaft drei optionale Winkeleinstellglieder 157 auf. Diese dienen z.B. bei einer Befestigung eines nach Art eines Winkel- oder Exzentervorsatzes ausgebildeten Werkzeugvorsatzes an der Maschinenschnittstelle 150 zur Vorgabe einer vorgegebenen Winkelposition.

Fig. 2 zeigt einen beispielhaften Werkzeugvorsatz 200, der an der Maschinenschnittstelle 150 der Handwerkzeugmaschine 100 von Fig. 1 verdrehgesichert befestigbar ist. Der Werkzeugvorsatz 200 ist gemäß einer Ausführungsform nach Art eines Bohrfuttervorsatzes ausgebildet und weist beispielhaft eine Verriegelungseinheit 202 sowie eine Spannfuttereinheit 204 auf. Es wird jedoch darauf hingewiesen, dass der Werkzeugvorsatz 200 nur beispielhaft als Bohrfuttervorsatz ausgebildet ist und nicht zur Einschränkung der Erfindung. Vielmehr kann der Werkzeugvorsatz 200 eine beliebige Ausgestaltung haben, z.B. nach Art eines Winkelvorsatzes, eines Exzentervorsatzes usw.

Die Spannfuttereinheit 204 weist beispielhaft einen Tragkörper 294 auf, an dem eine Mehrzahl von Spannbacken 290 gelagert ist, die über einen mit einer Spannhülse 280 versehenen Spannkörper 292 zum Einspannen eines zugeordneten Einsatzwerkzeugs, z.B. eines Rundbohrers, betätigbar ist. Der Tragkörper 294 ist z.B. über eine Schraubverbindung 275 verdrehgesichert an einem ersten axialen Endbereich 274 eines der Verriegelungseinheit 202 zugeordneten Betätigungsglieds 270 befestigt, sodass sich der Tragkörper 294 bei einer Drehbewegung des Betätigungsglieds 270 mit diesem mit dreht. Alternativ hierzu kann der Tragkörper 294 z.B. auch über eine Pressverbindung mit dem Betätigungsglied 270 verbunden sein oder auch einstückig mit diesem ausgebildet sein. Illustrativ ist in dem zumindest abschnittsweise hülsenförmig ausgebildeten Betätigungsglied 270 eine Antriebswelle 268 verdrehgesichert aufgenommen, z.B. über eine Pressverbindung 266, sodass sich das Betätigungsglied 270 bei einer Drehbewegung der Antriebswelle 268 mit dieser mit dreht. Alternativ hierzu können die Antriebswelle 268 und das Betätigungsglied 270 auch einstückig ausgebildet sein.

An einem freien axialen Ende der Antriebswelle 268, das exemplarisch in einem zweiten axialen Endbereich des Betätigungsglieds 270 aufgenommen ist, ist eine Mehrkant-Mitnahmekontur 265 ausgebildet. Ein Außenumfang des zweiten axialen Endbereichs des Betätigungsglieds 270 ist drehbeweglich in einem der Verriegelungseinheit 202 zugeordneten Lagerelement 212, z.B. einem nach Art eines Radiallagers ausgebildeten Wälzlager, gelagert bzw. bevorzugt in dieses eingepresst, sodass die Spannfuttereinheit 204 drehbeweglich an der Verriegelungseinheit 202 gelagert ist. Das Lagerelement 212 wird hierbei in axialer Richtung des Betätigungsglieds 270 zwischen einer an diesem ausgebildeten Ringschulter 226 und einem an diesem befestigten Sicherungsring 227 axial lagefixiert. Es wird jedoch darauf hingewiesen, dass eine geeignete Realisierung der Spannfuttereinheit 204 hinreichend aus dem Stand der Technik bekannt ist, sodass hier auf eine eingehende Beschreibung der Spannfuttereinheit 204 zwecks Knappheit der Beschreibung verzichtet werden kann.

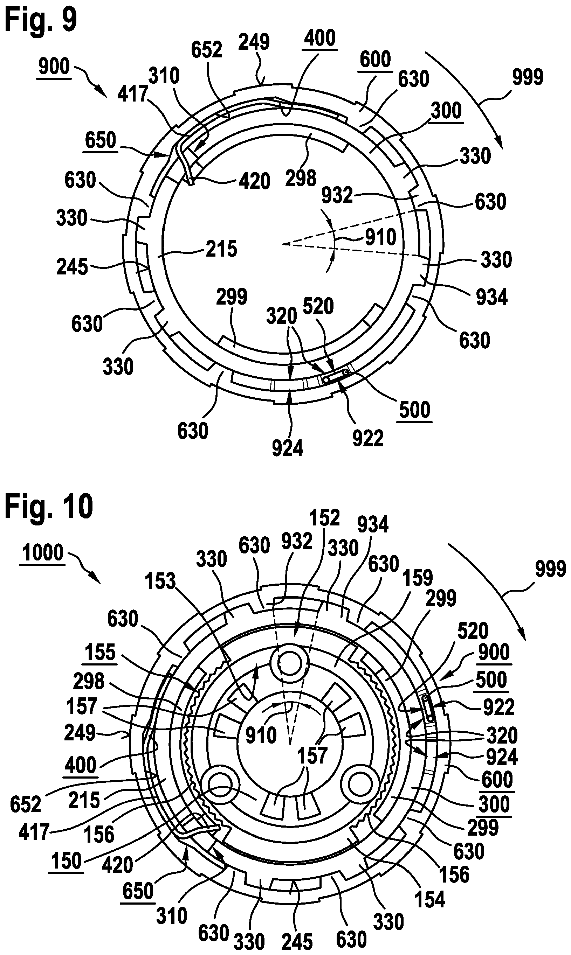

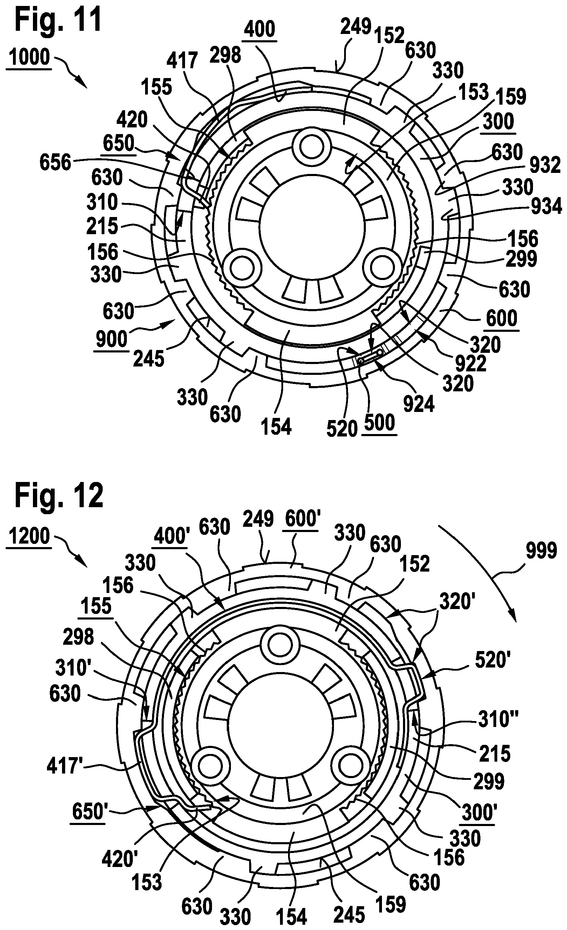

Die Verriegelungseinheit 202 ist gemäß einer Ausführungsform zumindest zur verdrehgesicherten Befestigung an der Maschinenschnittstelle 150 der Handwerkzeugmaschine 100 von Fig. 1 ausgebildet und ermöglicht in einem Entriegelungszustand ein Aufsetzen des Werkzeugvorsatzes 200 auf die Maschinenschnittstelle 150 und in einem Verriegelungszustand eine Verriegelung des Werkzeugvorsatzes 200 an der Maschinenschnittstelle 150 zum Betrieb. Hierzu weist die Verriegelungseinheit 202 bevorzugt einen drehbeweglichen Verriegelungskörper 300 auf, der im Entriegelungszustand in einer ersten Drehstellung und im Verriegelungszustand in einer zweiten Drehstellung an der Maschinenschnittstelle 150 der Handwerkzeugmaschine 100 von Fig. 1 angeordnet ist, wie unten bei Fig. 10 und 11 beschrieben. Dieser Verriegelungskörper 300 hat vorzugsweise an seinem Innenumfang mindestens zwei Halteglieder 298, 299, die z.B. nach Art von Bajonetten zur Ausbildung einer Bajonett-Verbindung mit den Bajonetten 152, 154 der Maschinenschnittstelle 150 von Fig. 1 ausgebildet sind.

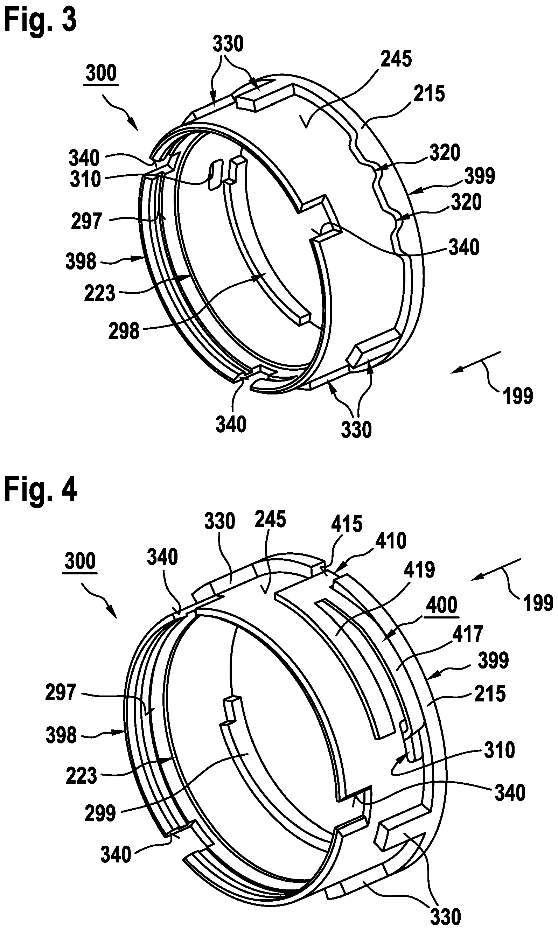

Gemäß einer Ausführungsform ist der Verriegelungskörper 300 zumindest abschnittsweise rohrförmig ausgebildet und bildet einen Innenraum 216 aus, sowie einen Außenumfang 245, an dem ein äußerer Kragen 215 vorgesehen ist. Der äußere Kragen 215 ist an einem von der Spannfuttereinheit 204 abgewandten axialen Ende (399 in Fig. 3) des Verriegelungskörpers 300 ausgebildet, an dessen gegenüberliegendem axialen Ende (398 in Fig. 3) eine innere Ringnut 297 vorgesehen ist, wobei in der Ringnut 297 ein innerer Sicherungsring 228 befestigt ist. Darüber hinaus hat der Verriegelungskörper 300 illustrativ eine innere Ringschulter 223, wobei im Bereich zwischen der Ringschulter 223 und dem Sicherungsring 228 beispielhaft ein Zentrierglied 260 axial lagefixiert ist. Zwischen diesem Zentrierglied 260 und der Ringschulter 223 ist bevorzugt ein elastisches Element 240 angeordnet, z.B. ein O-Ring aus Gummi-Material, eine Tellerfeder, eine Wellscheibe, eine zylindrische Druckfeder usw. Am Innenumfang 273 des Zentrierglieds 260 ist beispielhaft das Lagerelement 212 angeordnet und bevorzugt eingepresst.

Bevorzugt ist am Außenumfang 245 des Verriegelungskörpers 300 ein mit einer äußeren Grifffläche 249 versehenes, bevorzugt hülsenförmig ausgebildetes Betätigungselement 600 angeordnet und drehbeweglich gelagert, das einen inneren Vorsprung 241 aufweist, der illustrativ ringförmig ausgebildet ist. Das Betätigungselement 600 ist dazu ausgebildet, eine Verdrehung des Verriegelungskörpers 300 von der ersten in die zweite Drehstellung zu ermöglichen.

Im Bereich zwischen dem Verriegelungskörper 300 und dem Betätigungselement 600 sind gemäß einer Ausführungsform ein zumindest bereichsweise federndes Sperrglied 400 und ein Blockierglied 500 angeordnet. Das Sperrglied 400 ist zumindest abschnittsweise am Verriegelungskörper 300 lagefixiert und das Blockierglied 500 am Betätigungselement 600. Gemäß einer Ausführungsform ist das Sperrglied 400 dazu ausgebildet, im Verriegelungszustand der Verriegelungseinheit 202 eine Verdrehung des Verriegelungskörpers 300 von seiner zweiten Drehstellung in seine erste Drehstellung zu verhindern, wobei das Sperrglied 400 bevorzugt mit dem der Maschinenschnittstelle 150 der Handwerkzeugmaschine 100 von Fig. 1 zugeordneten Sperrelement 155 von Fig. 1 zusammenwirkt. Hierbei ist das Betätigungselement 600 bevorzugt dazu ausgebildet, das Sperrglied 400 im Verriegelungszustand der Verriegelungseinheit 202 zumindest abschnittsweise gegen die Maschinenschnittstelle 150 der Handwerkzeugmaschine 100 zu beaufschlagen, wie unten bei Fig. 11 beschrieben. Das Blockierglied 500 ist gemäß einer Ausführungsform dazu ausgebildet, das Betätigungselement 600 im Verriegelungszustand der Verriegelungseinheit 202 in einer Blockierstellung am Verriegelungskörper 300 zu blockieren, in der das Betätigungselement 600 das Sperrglied 400 zumindest abschnittsweise gegen die Maschinenschnittstelle 150 der Handwerkzeugmaschine 100 von Fig. 1 beaufschlagt, um eine selbsttätige Verdrehung des Betätigungselements 600 relativ zum Verriegelungskörper 300 zu verhindern.

Es wird jedoch darauf hingewiesen, dass das wie oben beschriebene Sperrglied 400 und das hiervon getrennte Blockierglied 500 lediglich beispielhaften Charakter haben und nicht zur Einschränkung der Erfindung dienen. Vielmehr können das Sperrglied und das Blockierglied auch einstückig ausgebildet werden und z.B. gemeinsam am Verriegelungskörper gehalten werden, wie beispielhaft unten bei Fig. 12 beschrieben. Darüber hinaus wird auch darauf hingewiesen, dass die beschriebenen, rohrförmigen bzw. hülsenförmigen Ausgestaltungen des Verriegelungskörpers 300 bzw. des Betätigungselements 600 ebenfalls lediglich beispielhaften Charakter haben und nicht als Einschränkung der Erfindung zu verstehen sind. Vielmehr können der Verriegelungskörper 300 und das Betätigungselement z.B. jeweils aus zwei oder mehr bogenförmigen Elementen ausgebildet sein usw.

Das Zentrierglied 260 und die Maschinenschnittstelle 150 der Handwerkzeugmaschine 100 von Fig. 1 bilden bevorzugt komplementäre geometrische Formen aus, die eine axiale Zentrierung der Verriegelungseinheit 202 an der Maschinenschnittstelle 150 von Fig. 1 ermöglichen und hierzu vorzugsweise ineinander greifen. Diese komplementären geometrischen Formen sind dazu ausgebildet, in axialer Richtung der Verriegelungseinheit 202 eine formschlüssige Verbindung auszubilden. Deshalb sind unter komplementären geometrischen Formen im Kontext der vorliegenden Erfindung ganz allgemein geometrische Formen zu verstehen, die zu einer formschlüssigen Verbindung zusammengefügt werden können.

Illustrativ weist das Zentrierglied 260 der Verriegelungseinheit 202 mindestens eine zumindest abschnittsweise konusförmige Zentrierhilfe 220 auf. Diese ist zum Eingreifen in die an der Maschinenschnittstelle 150 der Handwerkzeugmaschine 100 von Fig. 1 vorgesehene, zumindest abschnittsweise trichterförmige Zentrierhilfe 153 vorgesehen und bevorzugt zumindest abschnittsweise nach Art eines Rings 221 mit einem zumindest bereichsweise abgeschrägten Außenumfang 225 an einem axialen Endbereich 262 der Verriegelungseinheit 202 ausgebildet. Alternativ hierzu kann die Zentrierhilfe 220 anstelle des Rings 221 z.B. mehrere konusförmige Bogenabschnitte aufweisen, usw.

Zur Montage des Werkzeugvorsatzes 200 an der Maschinenschnittstelle 150 der Handwerkzeugmaschine 100 von Fig. 1 wird der Werkzeugvorsatz 200 in die Richtung 198 von Fig. 1 an die Maschinenschnittstelle 150 herangeführt und derart daran positioniert, dass das Betätigungsglied 270 zur Anlage gegen die Verriegelungshülse 149 der Werkzeugaufnahme 140 der Handwerkzeugmaschine 100 gebracht wird, sodass das freie Ende der Antriebswelle 268 zumindest abschnittsweise in die leere Innenmehrkant-Aufnahme 148 der Werkzeugaufnahme 140 eingreift. Dann wird der Werkzeugvorsatz 200 in die Richtung 198 zur Maschinenschnittstelle 150 hin verschoben, wobei das Betätigungsglied 270 die Verriegelungshülse 149 ebenfalls in die Richtung 198 verschiebt und die Werkzeugaufnahme 140 somit entriegelt, sodass das freie Ende der Antriebswelle 268 in die Innenmehrkant-Aufnahme 148 eingeschoben wird. Hierbei wird der Werkzeugvorsatz 200 derart auf die Maschinenschnittstelle 150 aufgeschoben, dass der Verriegelungskörper 300 gegen das Befestigungselement 151 der Maschinenschnittstelle 150 von Fig. 1 anliegt bzw. dieses umgreift, sodass durch eine Betätigung des Betätigungselements 600 die Verriegelungseinheit 202 an der Maschinenschnittstelle 150 von Fig. 1 verriegelt werden kann. Hierbei wird die zumindest abschnittsweise konusförmige Zentrierhilfe 220 der Verriegelungseinheit 202 gegen die zumindest abschnittsweise trichterförmige Zentrierhilfe 153 der Maschinenschnittstelle 150 von Fig. 1 in Anlage gebracht. Zum Abnehmen des Werkzeugvorsatzes 200 von der Handwerkzeugmaschine 100 von Fig. 1 wird dieser nach Entriegeln der Verriegelungseinheit 202 in die Richtung 199 von Fig. 1 von der Maschinenschnittstelle 150 von Fig. 1 entfernt.

Es wird jedoch erneut darauf hingewiesen, dass die Zentrierhilfen 220 und 153 von Fig. 1 lediglich beispielhaft konusförmig ausgebildet sind und nicht zur Einschränkung der Erfindung. Vielmehr müssen diese lediglich wie oben beschrieben zur Ausbildung einer formschlüssigen Verbindung geeignete, komplementäre geometrische Formen aufweisen. Dementsprechend kann z.B. die Zentrierhilfe 153 der Maschinenschnittstelle 150 wie bei Fig. 1 gezeigt trichterförmig ausgebildet sein, während die Zentrierhilfe 220 des Werkzeugvorsatzes 200 z.B. zylinder- bzw. ringförmig ist. Alternativ hierzu kann z.B. die Zentrierhilfe 220 des Werkzeugvorsatzes 200 wie oben beschrieben konusförmig, d.h. kegel- oder trichterförmig, ausgebildet sein, während die Zentrierhilfe 153 der Maschinenschnittstelle 150 von Fig. 1 zylinder- bzw. ringförmig ausgebildet ist, usw.

Fig. 3 zeigt den rohrförmigen Verriegelungskörper 300 von Fig. 2, der an einem axialen Ende 399 an seinem Außenumfang 245 den äußeren Kragen 215 und an seinem Innenumfang das nach Art eines Bajonetts ausgebildete Halteglied 298 aufweist. An seinem gegenüberliegenden axialen Ende 398 sind die innere Ringnut 297 und die innere Ringschulter 223 ausgebildet. Des Weiteren sind am axialen Ende 398 beispielhaft drei Aussparungen 340 zur Aufnahme zugeordneter Halteglieder des Zentrierglieds 260 von Fig. 2 ausgebildet, die z.B. vom Zentrierglied 260 nach Art von Vorsprüngen radial auswärts gerichtet sind.

Gemäß einer Ausführungsform ist am Verriegelungskörper 300, illustrativ an dessen Außenumfang 245, mindestens ein Mitnahmeglied 330 ausgebildet. Dieses ist beispielhaft stegartig ausgebildet und ausgehend vom äußeren Kragen 215 z.B. parallel zur Drehachse des Verriegelungskörpers 300 in Richtung des axialen Endes 398 ausgerichtet, wie mit dem Pfeil 199 von Fig. 2 angedeutet. Darüber hinaus ist am äußeren Kragen 215 illustrativ ein Fixierglied 320 ausgebildet. Des Weiteren ist im Bereich des äußeren Kragens 215 eine Durchgriffsöffnung 310 ausgebildet.

Fig. 4 zeigt den etwa 180° um seine Drehachse gedrehten Verriegelungskörper 300 von Fig. 3. Bei diesem ist im Gegensatz zur Fig. 3 durch die Drehung das am axialen Ende 399 Bajonettartig ausgebildete Halteglied 299 sichtbar.

Gemäß einer Ausführungsform ist das Sperrglied 400 von Fig. 2 am Außenumfang 245 der Verriegelungskörpers 300 befestigt. Hierzu hat das Sperrglied 400 einen Befestigungsabschnitt 410, der beispielhaft in einer nutartigen Aussparung 415 des äußeren Kragens 215 des Verriegelungskörpers 300 befestigt ist. Ausgehend von diesem Befestigungsabschnitt 410 ist das Sperrglied 400 illustrativ U-förmig ausgebildet mit einem zumindest bereichsweise parallel zum äußeren Kragen 215 verlaufenden Sperrfederarm 417 und einem z.B. parallel zu diesem verlaufenden Abstützarm 419 versehen. Der Sperrfederarm 417 greift mit seinem freien Ende durch die Durchgriffsöffnung 310 des Verriegelungskörpers 300 durch. Der Abstützarm 419 liegt bevorzugt vollständig gegen den Außenumfang 245 des Verriegelungskörpers 300 an.

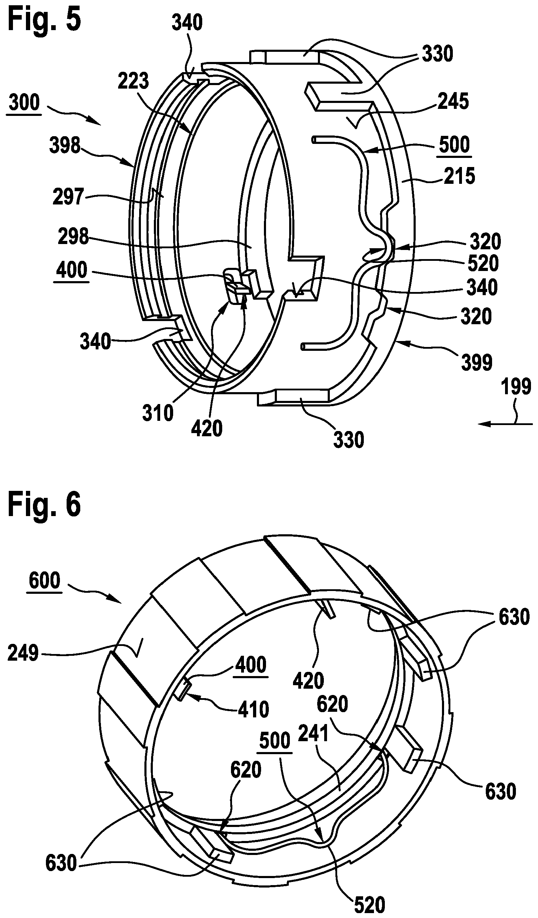

Fig. 5 zeigt den in Richtung des Pfeils 199 von Fig. 3 und 4 gespiegelten Verriegelungskörper 300 von Fig. 4 zur Verdeutlichung des durch dessen Durchgriffsöffnung 310 durchgreifenden freien Endes des Sperrfederarms 417 des Sperrglieds 400 von Fig. 4, das gemäß einer Ausführungsform einen Sperrabschnitt 420 ausbildet. Darüber hinaus zeigt Fig. 5 das illustrativ am Außenumfang 245 des Verriegelungskörpers 300 angeordnete Blockierglied 500 von Fig. 2, das wie bei Fig. 2 beschrieben und in Fig. 6 gezeigt am Betätigungselement 600 von Fig. 2 befestigt ist und beispielhaft die Form einer geschweiften Klammer aufweist.

Das Blockierglied 500 ist bevorzugt zumindest bereichsweise federnd ausgebildet und weist einen Blockierabschnitt 520 auf, der an dem am äußeren Kragen 215 des Verriegelungskörpers 300 vorgesehenen Fixierglied 320 lösbar fixierbar ist. Hierbei weist das Fixierglied 320 mindestens eine nach Art einer Ausnehmung ausgebildete Rastnut auf, in die der illustrativ nach Art einer federnden Rastnase ausgebildete Blockierabschnitt 520 einrastbar ist.

Fig. 6 zeigt das hülsenförmige Betätigungselement 600 von Fig. 2 mit dem an dessen Innenumfang angeordneten Sperrglied 400 von Fig. 4 und 5 zur Verdeutlichung des Befestigungsabschnitts 410 von Fig. 4 und des Sperrabschnitts 420 von Fig. 5. Das Betätigungselement 600 kann an seinem Außenumfang 249 eine zumindest bereichsweise gummierte Grifffläche aufweisen, die eine komfortable und sichere Betätigung des Betätigungselements 600 ermöglicht.

Gemäß einer Ausführungsform ist am Innenumfang des Betätigungselements 600 mindestens ein Mitnehmerelement 630 ausgebildet. Dieses ist beispielhaft stegartig ausgebildet und ausgehend vom inneren Vorsprung 241 z.B. parallel zur Drehachse des Betätigungselements 600 in Richtung des vom Vorsprung 241 abgewandten, axialen Ende des Betätigungselements 600 ausgerichtet, d.h. in Fig. 2 in Richtung des Pfeils 198. Darüber hinaus ist im Bereich des inneren Vorsprungs 241 ein Befestigungsglied 620 zur Befestigung des Blockierglieds 500 von Fig. 2 und 5 angeordnet. Dieses weist illustrativ zwei Aussparungen auf, in denen die freien Enden des nach Art einer geschweiften Klammer ausgebildeten Blockierglieds 500 angeordnet sind. Hierbei können die freien Enden auf beliebige Art und Weise dauerhaft in den beiden Aussparungen befestigt werden.

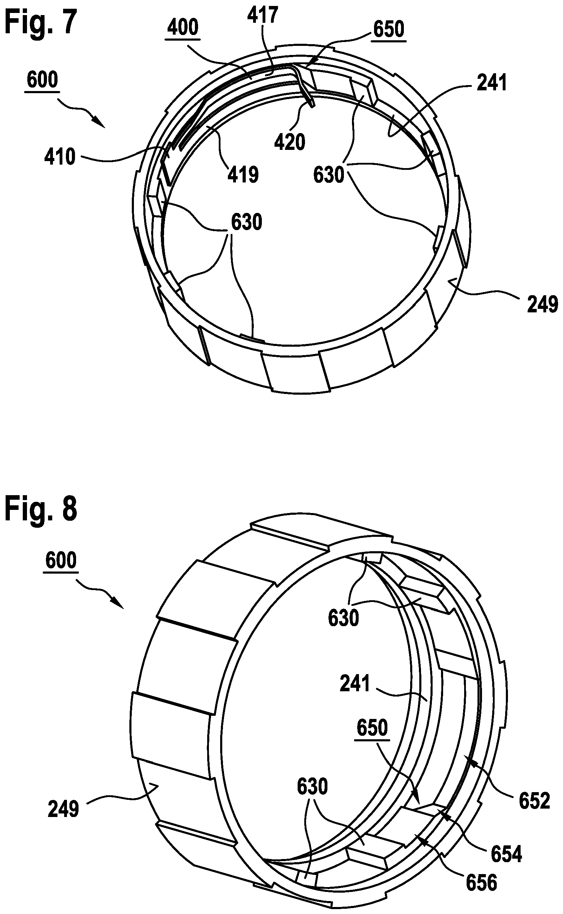

Fig. 7 zeigt das um seine Drehachse verkippte Betätigungselement 600 von Fig. 6 mit dem an dessen Innenumfang angeordneten Sperrglied 400 von Fig. 4 und einer am Innenumfang gemäß einer Ausführungsform ausgebildeten Steuerkurve 650 zur Betätigung des Sperrglieds 400 bzw. von dessen Sperrfederarm 417. Diese ist bevorzugt dazu ausgebildet, im Verriegelungszustand der Verriegelungseinheit 202 von Fig. 2 eine zumindest abschnittsweise Beaufschlagung des Sperrglieds 400 gegen die Maschinenschnittstelle 150 der Handwerkzeugmaschine 100 von Fig. 1 zu ermöglichen.

Fig. 8 zeigt das etwa 160° um seine Drehachse gedrehte Betätigungselement 600 von Fig. 6 ohne das Sperrglied 400 von Fig. 4 und 5 zur Verdeutlichung der Steuerkurve 650 von Fig. 7. Diese weist gemäß einer Ausführungsform einen Freigabeabschnitt 652 auf, in dem der Sperrfederarm 417 des Sperrglieds 400 in einer Freigabeposition radial auswärts federn kann, sowie einen illustrativ nach Art eines radial einwärts gerichteten Vorsprungs ausgebildeten Beaufschlagungsabschnitt 656, mit dem der Sperrfederarm 417 in einer Sperrposition radial einwärts beaufschlagt werden kann. Zwischen dem Freigabeabschnitt 652 und dem Beaufschlagungsabschnitt 656 ist bevorzugt ein abgeschrägter Übergangsabschnitt 654 ausgebildet, über den der Sperrfederarm 417 von seiner Freigabe- in seine Sperrposition überführt werden kann, und umgekehrt.

Fig. 9 zeigt eine Anordnung 900 mit dem Verriegelungskörper 300 von Fig. 3 bis 5 und dem drehbeweglich an dessen Außenumfang 245 gelagerten Betätigungselement 600 von Fig. 6 bis 8, sowie den dazwischen angeordneten Sperr- und Blockiergliedern 400 bzw. 500 von Fig. 4 bis 6. Der Verriegelungskörper 300 und das Betätigungselement 600 sind beispielhaft im Entriegelungszustand der Verriegelungseinheit 202 von Fig. 2 gezeigt, in dem der Blockierabschnitt 520 des Blockierglieds 500 in einer ersten Ausnehmung 922 des Fixerglieds 320 in einer Entriegelungsstellung verrastet ist und der Sperrfederarm 417 des Sperrglieds 400 in seiner Freigabeposition radial auswärts gegen den Freigabeabschnitt 652 der Steuerkurve 650 federt.

Gemäß einer Ausführungsform kann der Verriegelungskörper 300 durch eine Verdrehung des Betätigungselements 600 in Richtung eines Pfeils 999 - in Fig. 9 im Uhrzeigersinn - verdreht werden, um die Verriegelungseinheit 202 von Fig. 2 vom Entriegelungs- in den Verriegelungszustand zu überführen. Hierbei sind die Mitnahmeglieder 330 des Verriegelungskörpers 300 bevorzugt dazu ausgebildet, eine Drehbewegung des Betätigungselements 600 relativ zum Verriegelungskörper 300 zumindest um einen vorgegebenen Drehwinkel 910 zu ermöglichen, um eine Überführung des Blockierglieds 500 von der Entriegelungs- in die Blockierstellung zu ermöglichen, in der dessen Blockierabschnitt 520 in eine zweite Ausnehmung 924 des Fixierglieds 320 einrastet, und um eine Überführung des Sperrglieds 400 von seiner Freigabe- in seine Sperrposition zu ermöglichen.

Nach einer derartigen relativen Verdrehung um den Drehwinkel 910 liegen die Mitnehmerelemente 630 in Richtung des Pfeils 999 gesehen gegen die Mitnahmeglieder 330 an. Z.B. liegt ein Mitnehmerelement 932 nach der relativen Verdrehung um den Drehwinkel 910 gegen ein Mitnahmeglied 934 an. Bei einer Drehung in Richtung des Pfeils 999 über den Drehwinkel 910 hinaus sind die Mitnehmerelemente 630 des Betätigungselements 600 und die Mitnahmeglieder 330 des Verriegelungskörpers 300, die nun in Richtung des Pfeils 999 gesehen gegeneinander anliegen, bevorzugt dazu ausgebildet, zur Verdrehung des Verriegelungskörpers 300 von seiner ersten in seine zweite Drehstellung zur Drehmitnahme des Verriegelungskörpers 300 zusammenzuwirken.

Fig. 10 zeigt ein Werkzeugsystem 1000 mit der Handwerkzeugmaschine 100 von Fig. 1 und dem Werkzeugvorsatz 200 von Fig. 2, von denen zur Vereinfachung der Zeichnung lediglich die Maschinenschnittstelle 150 von Fig. 1 und die Anordnung 900 von Fig. 9 gezeigt sind. Die Anordnung 900 ist zur lösbaren Befestigung bzw. Verriegelung des Werkzeugvorsatzes 200 derart an der Maschinenschnittstelle 150 angeordnet, dass die Bajonette 298, 299 und 152, 154 des Verriegelungskörpers 300 und der Maschinenschnittstelle 150 durch eine Verdrehung des Betätigungselements 600 in die Richtung 999 von Fig. 9, und somit des Verriegelungskörpers 300 von seiner gezeigten, ersten Drehstellung in seine in Fig. 11 gezeigte zweite Drehstellung, gegeneinander verriegelt werden können.

Bei einer derartigen Verdrehung durch einen Benutzer des Werkzeugsystems 1000 werden die Bajonette 298, 299 und 152, 154 zunächst derart in Eingriff miteinander gebracht, dass durch das elastische Element 240 von Fig. 2 eine Spannkraft zwischen den Bajonetten 298 und 152 bzw. 299 und 154 aufgebaut wird, die größer ist als die Federkräfte des zwischen den Ausnehmungen 922 und 924 zu überführenden Blockierabschnitts 520 des Blockierglieds 500 und des entlang dem abgeschrägten Übergangsabschnitt 654 der Steuerkurve 650 zu führenden Sperrfederarms 417 des Sperrglieds 400. Somit erfolgt bei einer weiteren Verdrehung des Betätigungselements 600 in die Richtung 999 zunächst die bei Fig. 9 beschriebene relative Verdrehung zwischen dem Betätigungselement 600 und dem Verriegelungskörper 300 um den Drehwinkel 910, bei der eine Verdrehung des Verriegelungskörpers 300 durch die aufgebaute Spannkraft verhindert wird. Nach Beendigung der relativen Verdrehung um den Drehwinkel 910 greift der Sperrabschnitt 420 des Sperrglieds 400 in die Sperrverzahnung 156 des Sperrelements 155 ein und die aufgebaute Spannkraft kann durch eine von dem Benutzer aufgebrachte Drehkraft überkommen werden um die Bajonett-Verbindung vollständig zu schließen.

Da somit bevorzugt bereits beim Anziehen und zumindest beim vollständigen Schließen der Bajonett-Verbindung der Sperrabschnitt 420 des Sperrglieds 400 in die Sperrverzahnung 156 des Sperrelements 155 eingreift, wird hierbei ein ratterndes Geräusch bzw. ein Klackern erzeugt, das dem Benutzer einen auditiven Rückschluss liefert. Dieses Geräusch tritt beim Lösen der Bajonett-Verbindung bevorzugt nicht auf, da hier die Verbindungskräfte durch die aufgebaute Spannkraft vorzugsweise größer sind als die oben beschriebenen Federkräfte, sodass der Eingriff des Sperrabschnitts 420 in die Sperrverzahnung 156 gelöst wird, bevor die Bajonett-Verbindung gelöst wird.

Fig. 11 zeigt das Werkzeugsystem 1000 von Fig. 10 im Verriegelungszustand der Verriegelungseinheit 202 von Fig. 2, nach einer Verdrehung des Betätigungselements 600 in Richtung des Pfeils 999 und somit des Verriegelungskörpers 300 in seine zweite Drehstellung. Fig. 11 verdeutlicht die Anordnung des in der Blockierstellung in der Ausnehmung 924 des Fixierglieds 320 angeordneten Blockierabschnitts 520 des Blockierglieds 500 sowie das durch eine elastische Verformung gegen die Maschinenschnittstelle 150 der Handwerkzeugmaschine 100 beaufschlagte Sperrglied 400, dessen Sperrabschnitt 420 in die Sperrverzahnung 156 einrastet, um eine selbsttätige Verdrehung des Verriegelungskörpers 300 von seiner zweiten in die erste Drehstellung von Fig. 9 und 10 zu verhindern. Darüber hinaus verdeutlicht Fig. 11 den vom Beaufschlagungsabschnitt 656 der Steuerkurve 650 radial einwärts beaufschlagten Sperrfederarm 417.

Fig. 12 zeigt ein Werkzeugsystem 1200 mit der Handwerkzeugmaschine 100 von Fig. 1, von der zur Vereinfachung der Zeichnung lediglich die Maschinenschnittstelle 150 gezeigt ist, und dem Werkzeugvorsatz 200 von Fig. 2, der einen Verriegelungskörper 300', ein Betätigungselement 600' und ein Sperr- und Blockierglied 400' aufweist, die gemäß einer alternativen Ausführungsform ausgebildet sind. Hierbei weisen funktional gleiche aber baulich ggf. leicht abgewandelte Elemente in beiden Ausführungsformen identische Bezugszeichen auf.

Im Gegensatz zu dem Sperrglied 400 von Fig. 4 und dem Blockierglied 500 von Fig. 5 ist das Sperr- und Blockierglied 400' einstückig mit einem Sperrabschnitt 420' ausgeführt und am Innenumfang des Verriegelungskörpers 300' angeordnet. Eine derartige einstückige Ausführung des Sperr- und Blockierglieds 400' erfordert einige konstruktive Änderungen an dem Verriegelungskörper 300' und dem Betätigungselement 600' im Gegensatz zu dem Verriegelungskörper 300 von Fig. 3 bis 5 und dem Betätigungselement 600 von Fig. 5 bis 8. Beispielsweise hat das illustrative Sperr- und Blockierglied 400' lediglich einen Sperrgliedabschnitt 417' und einen Blockiergliedabschnitt 520', die jeweils die Funktionalität des Sperrfederarm 417 bzw. des Blockierabschnitts 520 von Fig. 4 und 5 übernehmen. Diese Abschnitte 417', 520' greifen durch am Verriegelungskörper 300' vorgesehene Durchgriffsöffnungen 310' bzw. 310" durch und sind federbeaufschlagt gegen einen Innenumfang des Betätigungselements 600', an dem illustrativ eine Steuerkurve 650' und ein Fixierglied 320' ausgebildet sind.

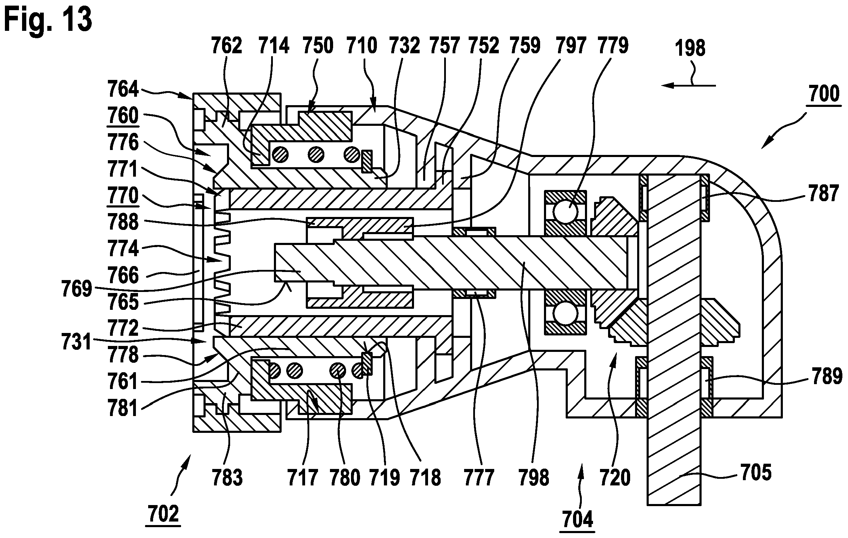

Fig. 13 zeigt einen beispielhaften Werkzeugvorsatz 700 gemäß einer alternativen Ausführungsform, der bevorzugt ebenfalls zur Befestigung an der Maschinenschnittstelle 150 der Handwerkzeugmaschine 100 von Fig. 1 ausgebildet ist. Der Werkzeugvorsatz 700 ist nach Art eines Winkelvorsatzes ausgebildet und weist beispielhaft eine nachfolgend zwecks Klarheit der Beschreibung als "Vorsatzschnittstelle" bezeichnete Befestigungsschnittstelle 702 sowie eine nachfolgend auch als "Winkelantriebsabschnitt" bezeichnete Antriebseinheit 704 auf. Es wird jedoch darauf hingewiesen, dass der Werkzeugvorsatz 700 nur beispielhaft als Winkelvorsatz ausgebildet ist und nicht zur Einschränkung der Erfindung. Vielmehr kann der Werkzeugvorsatz 700 eine beliebige Ausgestaltung haben, z. B. nach Art eines Exzentervorsatzes, eines Bohrfuttervorsatzes usw. Zur Vereinfachung der Beschreibung wird der Werkzeugvorsatz 700 nachfolgend auch als der "Winkelvorsatz 700" bezeichnet.

Der Winkelantriebsabschnitt 704 weist beispielhaft ein Vorsatzgehäuse 710 auf, in dem eine drehend antreibbare Antriebswelle 798 in zwei Lagerelementen 777, 779 drehbeweglich gelagert ist. Die Antriebswelle 798 dient zum Antrieb einer in einem vorgegebenen Winkel, illustrativ 90°, hierzu angeordneten Abtriebswelle 705, die ebenfalls drehbeweglich im Vorsatzgehäuse 710 gelagert ist, beispielhaft in zwei Lagerelementen 787, 789, und z. B. zur Aufnahme des Schrauberbits 170 von Fig. 1 ausgebildet sein kann. Hierbei treibt die Antriebswelle 798 die Abtriebswelle 705 z. B. über eine geeignete Umsetzung 720 an. Es wird jedoch darauf hingewiesen, dass eine geeignete Realisierung des Winkelantriebsabschnitts 704 hinreichend aus dem Stand der Technik bekannt ist, sodass hier auf eine eingehende Beschreibung des Winkelantriebabschnitts 704 zwecks Knappheit der Beschreibung verzichtet werden kann.

Im Bereich eines vom Winkelantriebsabschnitt 704 abgewandten, freien Endes 769 der Antriebswelle 798, an dem beispielhaft eine Mehrkant-Mitnahmekontur 765 ausgebildet ist, ist ein zumindest bereichsweise hülsen- bzw. rohrförmig ausgebildetes Winkeleinstellelement 772 angeordnet, durch das die Antriebswelle 798 durchgreift. Dieses Winkeleinstellelement 772 ist bevorzugt starr, d. h. axial und radial unbeweglich mit dem Vorsatzgehäuse 710 verbunden und/oder einstückig mit diesem ausgebildet. Illustrativ hat das Winkeleinstellelement 772 an seinem dem Winkelantriebsabschnitt 704 zugewandten axialen Ende einen äußeren Ringkragen 752, der axial und radial unbeweglich zwischen zwei z. B. ringförmig ausgebildeten Vorsprüngen 757, 759 des Vorsatzgehäuses 710 angeordnet ist, z. B. durch Einpressen oder Verklemmen. An seinem anderen axialen Ende 771 ist eine stirnseitige Winkeleinstellverzahnung 774 vorgesehen.

Darüber hinaus ist der Antriebswelle 798 ein mit einem freien Ende 788 versehenes Betätigungsglied 797 zugeordnet, dessen Funktionalität der Funktionalität des Betätigungsglieds 270 von Fig. 2 entspricht, sodass hier zwecks Knappheit der Beschreibung auf eine eingehende Beschreibung hiervon verzichtet wird. Alternativ hierzu können die Antriebswelle 798 und das Betätigungsglied 797 auch einstückig ausgebildet sein. Das Betätigungsglied 797 ist beispielhaft im Inneren des Winkeleinstellelements 772 angeordnet und bevorzugt radial von diesem beabstandet.

Gemäß einer Ausführungsform ist die Antriebswelle 798 relativ zum Betätigungsglied 797 verdrehbar. In diesem Fall kann die Antriebswelle 798 z. B. in einem in das Betätigungsglied 797 eingepressten Gleitlager, z. B. einem Sinterlager, drehbeweglich gelagert sein.

Die Vorsatzschnittstelle 702 dient zur Befestigung des Werkzeugvorsatzes 700 an einer zugeordneten Handwerkzeugmaschine, z. B. der Handwerkzeugmaschine 100 von Fig. 1, und weist illustrativ eine Winkelpositionseinstelleinheit 770 auf, die ebenfalls beim Werkzeugvorsatz 200 von Fig. 2 Anwendung finden kann und der das Winkeleinstellelement 772 zugeordnet ist, sowie eine Verriegelungseinheit 760. Die Verriegelungseinheit 760 ist dazu ausgebildet, in einem Verriegelungszustand den Werkzeugvorsatz 700 zum Betrieb an der Handwerkzeugmaschine in einer vorgegebenen Winkelposition an dieser zu verriegeln und in einem Entriegelungszustand ein Abziehen des Werkzeugvorsatzes 700 von der Handwerkzeugmaschine zu ermöglichen. Die Winkelpositionseinstelleinheit 770 ist dazu ausgebildet, eine Einstellung der vorgegebenen Winkelposition des Werkzeugvorsatzes 700 zum Betrieb an der Handwerkzeugmaschine zu ermöglichen. Hierbei ist die Winkelpositionseinstelleinheit 770 gemäß einer Ausführungsform im Verriegelungszustand der Verriegelungseinheit 760 betätigbar, um eine Änderung der vorgegebenen Winkelposition zu ermöglichen. Eine derartige Betätigung zur Änderung der vorgegebenen Winkelposition erfolgt bevorzugt durch eine kombinierte Längs- und Drehbewegung des Vorsatzgehäuses 710.

Gemäß einer Ausführungsform weist die Verriegelungseinheit 760 einen Verriegelungskörper 762 auf, insbesondere einen zumindest abschnittsweise rohrförmig ausgebildeten Verriegelungskörper bzw. einen mit einem rohrförmigen Aufnahmeabschnitt 761 versehenen Verriegelungskörper. In dem rohrförmigen Aufnahmeabschnitt 761 und somit in der Verriegelungseinheit 760 ist das Winkeleinstellelement 772 längs- und drehbeweglich gelagert. An einem vom Winkelantriebsabschnitt 704 abgewandten axialen Ende des Verriegelungskörpers 762 geht dieser über eine Ringschulter 781 vom rohrförmigen Aufnahmeabschnitt 761 einerseits in einen verbreiterten Bereich 783 und andererseits in ein Zentrierglied 731 über, das z. B. mindestens zwei bogenförmige, in Längsrichtung des Werkzeugvorsatzes 700, d. h. in die Richtung 198 von Fig. 1, abgeschrägte Zentrierbereiche 776, 778 aufweist. Es wird jedoch darauf hingewiesen, dass das Zentrierglied 731 lediglich beispielhaft die mindestens zwei bogenförmigen, abgeschrägten Zentrierbereiche 776, 778 aufweist und nicht zur Einschränkung der Erfindung. Das Zentrierglied 731 kann vielmehr auch einen einzelnen, nach Art eines Kegelstumpfs ausgebildeten Zentrierbereich aufweisen.

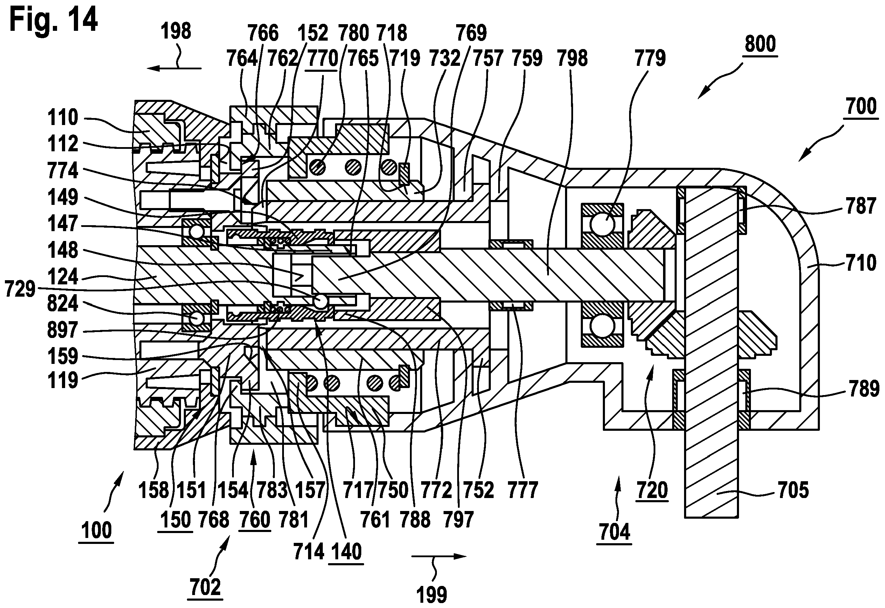

In dem verbreiterten Bereich 783 sind bevorzugt mindestens zwei Verriegelungselemente 766 (und 768 in Fig. 14) vorgesehen, die beispielhaft nach Art von Bajonetten zur Ausbildung einer Bajonett-Verbindung ausgebildet sind. Des Weiteren ist am Außenumfang dieses verbreiterten Bereichs 783 exemplarisch ein Betätigungsring 764 angeordnet, der zur Verriegelung des Verriegelungskörpers 762 an der Handwerkzeugmaschine betätigbar ist, wobei der Verriegelungskörper 762 und der Betätigungsring 764 einstückig ausgebildet sein können. Am Außenumfang des rohrförmigen Aufnahmeabschnitts 761 ist illustrativ eine Rückstellhülse 750 axial und radial beweglich gelagert. Diese stützt sich mit einem Ringkragen 714, der an einem der Ringschulter 781 des rohrförmigen Aufnahmeabschnitts 761 zugewandten axialen Ende der Rückstellhülse 750 ausgebildet ist, gegen die Ringschulter 781 ab, und greift an ihrem anderen axialen Ende in eine am Vorsatzgehäuse 710 vorgesehene Ringnut 717 ein. Alternativ hierzu kann die Rückstellhülse 750 an das Vorsatzgehäuse 710 angeformt und/oder einstückig mit diesem ausgebildet sein.

Darüber hinaus ist zwischen dem Ringkragen 714 und einem in einer äußeren Ringnut 718 des rohrförmigen Aufnahmeabschnitts 761 angeordneten Sicherungsring 719 ein Federelement 780, z. B. eine Druckfeder, vorgesehen, das die Rückstellhülse 750 mit einer vorgegebenen Federkraft in Richtung der Ringschulter 781, d. h. in die Richtung 198 von Fig. 1, vorspannt. Die Ringnut 718 ist beispielhaft im Bereich eines dem Winkelantriebsabschnitt 704 zugewandten axialen Endes 732 des rohrförmigen Aufnahmeabschnitts 761 ausgebildet.

Fig. 14 zeigt ein beispielhaftes Werkzeugsystem 800, das illustrativ die Handwerkzeugmaschine 100 von Fig. 1 und den Winkelvorsatz 700 von Fig. 13 aufweist, zur Illustration einer beispielhaften Montage des Winkelvorsatzes 700 an der Handwerkzeugmaschine 100. Diese ist hier nur abschnittsweise anhand eines Ausschnitts des Gehäuses 110 von Fig. 1 gezeigt, an dessen Stirnseite 112 die Maschinenschnittstelle 150 von Fig. 1 angeordnet ist, und in dem die Abtriebswelle 124 in einem illustrativen Wälzlager 824 drehbeweglich gelagert ist, wobei an der Abtriebswelle 124 die Werkzeugaufnahme 140 von Fig. 1 angeordnet ist. Wie bei Fig. 1 beschrieben ist die Maschinenschnittstelle 150 hierbei gemäß einer Ausführungsform am Getriebegehäuse 119 angeordnet. Hierbei ist illustrativ das Befestigungselement 151 mit geeigneten Befestigungsgliedern, z. B. Schrauben oder Nieten, am Getriebegehäuse 119 befestigt.

Zur Montage des Winkelvorsatzes 700 an der Maschinenschnittstelle 150 der Handwerkzeugmaschine 100 wird der Winkelvorsatz 700 in die Richtung 198 von Fig. 1 an die Maschinenschnittstelle 150 von Fig. 1 herangeführt und in einer vorgegebenen Winkelposition derart daran positioniert, dass der erweiterte Bereich 783 des rohrförmigen Aufnahmeabschnitts 761 im Bereich des Befestigungselements 151 der Maschinenschnittstelle 150 angeordnet wird. Hierbei wird das Betätigungsglied 797 des Winkelvorsatzes 700 mit seinem freien Ende 788 zur Anlage gegen die Verriegelungshülse 149 der Werkzeugaufnahme 140 der Handwerkzeugmaschine 100 gebracht, sodass das freie Ende 769 der Antriebswelle 798 abschnittsweise in die leere Innenmehrkant-Aufnahme 148 der Werkzeugaufnahme 140 eingreift und an einem vollständigen Eingreifen durch beispielhaft der Werkzeugaufnahme 140 zugeordnete Verriegelungskugeln 749 gehindert wird. Diese Verriegelungskugeln 749, oder andere geeignete Verriegelungselemente, werden von der Verriegelungshülse 149 der Werkzeugaufnahme 140 auf eine z. B. dem Fachmann bekannte Art und Weise radial einwärts beaufschlagt, um somit ein ungehindertes Einschieben der Antriebswelle 768 in die Innenmehrkant-Aufnahme 148 zu verhindern, wobei die Verriegelungshülse 149 von einem Federelement 897 in die von der Handwerkzeugmaschine 100 wegweisende axiale Richtung 199 von Fig. 1 federbeaufschlagt wird.

In einem weiteren Schritt wird nun der Winkelvorsatz 700 in Richtung der Handwerkzeugmaschine 100, d. h. in die Richtung 198, auf die Maschinenschnittstelle 150 aufgeschoben, z. B. bis der erweiterte Bereich 783 des rohrförmigen Aufnahmeabschnitts 761 gegen das Befestigungselement 151 der Maschinenschnittstelle 150 anliegt, sodass durch eine Drehung des Betätigungsrings 764 der Verriegelungseinheit 760 des Werkzeugvorsatzes 700 dessen Bajonette 766, 768 in Eingriff mit den Bajonetten 152, 154 des Befestigungselements 151 gebracht und somit an diesen verriegelt werden können, sodass die Verriegelungseinheit 760 von ihrem Entriegelungszustand in den Verriegelungszustand übergeht. In diesem Verriegelungszustand wird das Vorsatzgehäuse 710 des Winkelvorsatzes 700 mit einer vorgegebenen, vom Federelement 780 der Verriegelungseinheit 760 des Werkzeugvorsatzes 700 aufgebrachten Federkraft in die Richtung 198 der Handwerkzeugmaschine 100 beaufschlagt.

Darüber hinaus wird durch das Aufschieben des Werkzeugvorsatzes 700 auf die Maschinenschnittstelle 150 die Verriegelungshülse 149 der Werkzeugaufnahme 140 von dem Betätigungsglied 797 des Winkelvorsatzes 700 gegen eine von dem Federelement 897 aufgebrachte Federkraft in die Richtung 198 verschoben, sodass das freie Ende 769 der Antriebswelle 798 in die Innenmehrkant-Aufnahme 148 eingeschoben werden kann. Hierdurch wird eine einhändige Montage des Werkzeugvorsatzes 700 an der Handwerkzeugmaschine 100 ermöglicht, wobei die Antriebswelle 798 tangential und axial spielbehaftet und bevorzugt ausschließlich zur Drehmomentübertragung in der Innenmehrkant-Aufnahme 148 des Aufnahmekörpers 147 der Werkzeugaufnahme 140 aufgenommen wird.

Des Weiteren werden die abgeschrägten Zentrierbereiche 776, 778 des rohrförmigen Aufnahmeabschnitts 761 des Werkzeugvorsatzes 700 in Anlage gegen die nach Art einer ringförmigen Kegelfläche 159 ausgebildete Zentrierhilfe 153 des Befestigungselements 151 gebracht. Somit kann eine sichere und zuverlässige axiale Zentrierung des Werkzeugvorsatzes 700 an der Werkzeugaufnahme 140 bzw. relativ zur Abtriebsspindel 124 der Handwerkzeugmaschine 100 ermöglicht werden. Darüber hinaus wird die Winkeleinstellverzahnung 774 des Winkeleinstellelements 772 des Werkzeugvorsatzes 700 in Eingriff mit den Winkeleinstellgliedern 157 des Befestigungselements 151 gebracht. Somit wird die vorgegebene Winkelposition zum Betrieb des Werkzeugvorsatzes 700 an der Handwerkzeugmaschine 100 festgelegt.

Anschließend wird der Betätigungsring 764 des Winkelvorsatzes 700 und somit der gesamte Winkelvorsatz 700 freigegeben, woraufhin das Betätigungsglied 797 aufgrund der Federkraft des Federelements 897 von der Verriegelungshülse 149 der Werkzeugaufnahme 140 in die Richtung 199 beaufschlagt wird, sodass eine axiale Verschiebung des gesamten Winkelvorsatzes 700 in die Richtung 199 erzwungen wird. Somit wird die Bajonett-Verbindung zwischen den Bajonetten 766, 768 des Werkzeugvorsatzes 700 und den Bajonetten 152, 154 des Befestigungselements 151 zusätzlich gesichert.

## Patentansprüche

1. Werkzeugvorsatz (200) zur Befestigung an einer Befestigungsschnittstelle (150) einer Handwerkzeugmaschine (100), mit einer Verriegelungseinheit (202), die in einem Entriegelungszustand ein Aufsetzen des Werkzeugvorsatzes (200) auf die Befestigungsschnittstelle (150) der Handwerkzeugmaschine (100) ermöglicht und in einem Verriegelungszustand eine Verriegelung des Werkzeugvorsatzes (200) an der Befestigungsschnittstelle (150) der Handwerkzeugmaschine (100) zum Betrieb ermöglicht, wobei die Verriegelungseinheit (202) einen drehbeweglichen Verriegelungskörper (300) aufweist, und wobei dem Entriegelungszustand eine erste Drehstellung des Verriegelungskörpers (300) und dem Verriegelungszustand eine zweite Drehstellung des Verriegelungskörpers (300) zugeordnet ist, wobei die Verriegelungseinheit (202) ein Sperrglied (400) aufweist, das dazu ausgebildet ist, im Verriegelungszustand eine Verdrehung des Verriegelungskörpers (300) von der zweiten Drehstellung in die erste Drehstellung zu verhindern, wobei die Verriegelungseinheit (202) ein Betätigungselement (600) aufweist, das dazu ausgebildet ist, eine Verdrehung des Verriegelungskörpers (300) von der ersten in die zweite Drehstellung zu ermöglichen, und dem Betätigungselement (600) ein Blockierglied (500) zugeordnet ist, das dazu ausgebildet ist, das Betätigungselement (600) im Verriegelungszustand in einer Blockierstellung am Verriegelungskörper (300) zu blockieren, in der das Betätigungselement (600) das Sperrglied (400) zumindest abschnittsweise gegen die Befestigungsschnittstelle (150) der Handwerkzeugmaschine (100) beaufschlagt, **dadurch gekennzeichnet, dass** das Blockierglied (500) zumindest bereichsweise federnd ausgebildet ist und einen Blockierabschnitt (520) aufweist, der in der Blockierstellung in einem am Verriegelungskörper (300) vorgesehenen Fixierglied (924) lösbar fixierbar ist.

2. Werkzeugvorsatz nach Anspruch 1, **dadurch gekennzeichnet, dass** das Sperrglied (400) dazu ausgebildet ist, im Verriegelungszustand mit einem der Befestigungsschnittstelle (150) der Handwerkzeugmaschine (100) zugeordneten Sperrelement (155) zusammenzuwirken.

3. Werkzeugvorsatz nach Anspruch 2, **dadurch gekennzeichnet, dass** das Sperrelement (155) mindestens eine Sperrverzahnung (156) aufweist.

4. Werkzeugvorsatz nach einem der vorhergehenden Ansprüche, **dadurch gekennzeichnet, dass** das Sperrglied (400) zumindest bereichsweise federnd ausgebildet ist und zumindest einen Sperrabschnitt (420) aufweist, der im Verriegelungszustand durch eine elastische Verformung des Sperrglieds (400) gegen die Befestigungsschnittstelle (150) der Handwerkzeugmaschine (100) beaufschlagt ist.

5. Werkzeugvorsatz nach Anspruch 3 und 4, **dadurch gekennzeichnet, dass** der Sperrabschnitt (420) dazu ausgebildet ist, im Verriegelungszustand in die Sperrverzahnung (156) einzurasten, um die Verdrehung des Verriegelungskörpers (300) von der zweiten Drehstellung in die erste Drehstellung zu verhindern.

6. Werkzeugvorsatz nach einem der vorhergehenden Ansprüche, **dadurch gekennzeichnet, dass** der Verriegelungskörper (300) zumindest abschnittsweise rohrförmig ausgebildet ist und das Betätigungselement (600) drehbeweglich am Außenumfang (245) des Verriegelungskörpers (300) gelagert ist.

7. Werkzeugvorsatz nach einem der vorhergehenden Ansprüche, **dadurch gekennzeichnet, dass** am Betätigungselement (600) mindestens ein Mitnehmerelement (630) und am Verriegelungskörper (300) mindestens ein Mitnahmeglied (330) ausgebildet sind, wobei das Mitnehmerelement (630) und das Mitnahmeglied (330) dazu ausgebildet sind, bei einer Betätigung des Betätigungselements (600) zur Verdrehung des Verriegelungskörpers (300) von der ersten in die zweite Drehstellung zur Drehmitnahme des Verriegelungskörpers (300) zusammenzuwirken.

8. Werkzeugvorsatz nach Anspruch 7, **dadurch gekennzeichnet, dass** das Mitnahmeglied (330) dazu ausgebildet ist, eine Drehbewegung des Betätigungselements (600) relativ zum Verriegelungskörper (300) zumindest um einen vorgegebenen Drehwinkel (910) zu ermöglichen.

9. Werkzeugvorsatz nach einem der vorhergehenden Ansprüche, **dadurch gekennzeichnet, dass** das Betätigungselement (600) dazu ausgebildet ist, das Sperrglied (400) im Verriegelungszustand zumindest abschnittsweise gegen die Befestigungsschnittstelle (150) der Handwerkzeugmaschine (100) zu beaufschlagen.

10. Werkzeugvorsatz nach Anspruch 9, **dadurch gekennzeichnet, dass** das Betätigungselement (600) eine Steuerkurve (650) aufweist, die dazu ausgebildet ist, im Verriegelungszustand die zumindest abschnittsweise Beaufschlagung des Sperrglieds (400) gegen die Befestigungsschnittstelle (150) der Handwerkzeugmaschine (100) zu ermöglichen.

11. Werkzeugvorsatz nach einem der vorhergehenden Ansprüche, **dadurch gekennzeichnet, dass** das Fixierglied (924) nach Art einer Ausnehmung ausgebildet ist und der Blockierabschnitt (520) dazu ausgebildet ist, in der Blockierstellung in dem Fixierglied (924) einzurasten, um im Verriegelungszustand eine selbsttätige Verdrehung des Betätigungselements (600) relativ zum Verriegelungskörper (300) zu verhindern.

12. Werkzeugvorsatz nach einem der vorhergehenden Ansprüche, **dadurch gekennzeichnet, dass** das Sperrglied (400) und das Blockierglied (500) einstückig ausgebildet sind.

13. Werkzeugvorsatz nach einem der vorhergehenden Ansprüche, **dadurch gekennzeichnet, dass** der Verriegelungskörper (300) Verriegelungselemente (298, 299) aufweist, die nach Art von Bajonetten zur Ausbildung einer Bajonett-Verbindung mit der Befestigungsschnittstelle (150) der Handwerkzeugmaschine (100) ausgebildet sind.

14. Werkzeugsystem (300) mit einer Handwerkzeugmaschine (100), die eine Befestigungsschnittstelle (150) aufweist, und mit einem Werkzeugvorsatz (200) zur Befestigung an der Befestigungsschnittstelle (150) der Handwerkzeugmaschine (100) nach einem der Ansprüche 1 bis 13.

## Claims

1. Tool attachment (200) for fastening to a fastening interface (150) of a portable power tool (100), having a locking unit (202), which, in an unlocked state, allows the tool attachment (200) to be fitted on the fastening interface (150) of the portable power tool (100) and, in a locked state, allows the tool attachment (200) to be locked at the fastening interface (150) of the portable power tool (100) for operation, wherein the locking unit (202) has a rotatable locking body (300), and wherein the unlocked state is associated with a first rotational position of the locking body (300) and the unlocked state is associated with a second rotational position of the locking body (300), wherein the locking unit (202) has an interlocking member (400), which is configured to prevent the locking body (300) from rotating from the second rotational position into the first rotational position in the locked state, wherein the locking unit (202) has an actuating element (600), which is configured to allow the locking body (300) to rotate from the first rotational position into the second, and the actuating element (600) is assigned a blocking member (500), which is configured to block the actuating element (600) in the locked state in a blocking position on the locking body (300), in which position the actuating element (600) presses the interlocking member (400) at least partially against the fastening interface (150) of the portable power tool (100), **characterized in that** the blocking member (500) is formed at least regionally in a resilient manner and has a blocking portion (520), which, in the blocking position, is able to be fixed in a releasable manner in a fixing member (924) provided on the locking body (300).

2. Tool attachment according to Claim 1, **characterized in that** the interlocking member (400) is configured to cooperate, in the locked state, with an interlocking element (155) assigned to the fastening interface (150) of the portable power tool (100).

3. Tool attachment according to Claim 2, **characterized in that** the interlocking element (155) has at least one interlocking toothing (156).

4. Tool attachment according to one of the preceding claims, **characterized in that** the interlocking member (400) is formed at least regionally in a resilient manner and has at least one interlocking portion (420), which, in the locked state, is pressed against the fastening interface (150) of the portable power tool (100) by elastic deformation of the interlocking member (400).

5. Tool attachment according to Claims 3 and 4, **characterized in that** the interlocking portion (420) is configured to engage in the interlocking toothing (156) in the locked state, in order to prevent the locking body (300) from rotating from the second rotational position into the first rotational position.

6. Tool attachment according to one of the preceding claims, **characterized in that** the locking body (300) is formed at least partially in a tubular manner and the actuating element (600) is mounted in a rotatable manner on the outer circumference (245) of the locking body (300).

7. Tool attachment according to one of the preceding claims, **characterized in that** at least one driver element (630) is formed on the actuating element (600) and at least one entraining member (330) is formed on the locking body (300), wherein the driver element (630) and the entraining element (330) are configured, upon actuation of the actuating element (600) to rotate the locking member (300) from the first rotational position into the second, to cooperate to rotationally entrain the locking body (300).

8. Tool attachment according to Claim 7, **characterized in that** the entraining member (330) is configured to allow a rotational movement of the actuating element (600) relative to the locking body (300) at least through a predefined angle of rotation (910).

9. Tool attachment according to one of the preceding claims, **characterized in that** the actuating element (600) is configured to press the interlocking member (400) at least partially against the fastening interface (150) of the portable power tool (100) in the locked state.

10. Tool attachment according to Claim 9, **characterized in that** the actuating element (600) has a control cam (650), which is configured to allow the interlocking member (400) to be pressed at least partially against the fastening interface (150) of the portable power tool (100) in the locked state.

11. Tool attachment according to one of the preceding claims, **characterized in that** the fixing member (924) is formed in the manner of a recess and the blocking portion (520) is configured to engage in the fixing member (924) in the blocking position, in order to prevent automatic rotation of the actuating element (600) relative to the locking body (300) in the locked state.

12. Tool attachment according to one of the preceding claims, **characterized in that** the interlocking member (400) and the blocking member (500) are formed in one piece.

13. Tool attachment according to one of the preceding claims, **characterized in that** the locking body (300) has locking elements (298, 299), which are formed in the manner of bayonets so as to form a bayonet connection with the fastening interface (150) of the portable power tool (100).

14. Tool system (300) having a portable power tool (100) that has a fastening interface (150), and having a tool attachment (200) for fastening at the fastening interface (150) of the portable power tool (100) according to one of Claims 1 to 13.

## Revendications

1. Adaptateur d'outil (200) destiné à être fixé à une interface de fixation (150) d'une machine-outil manuelle (100), comportant une unité de verrouillage (202) qui permet, dans un état de déverrouillage, un placement de l'adaptateur d'outil (200) sur l'interface de fixation (150) de la machine-outil manuelle (100) et permet, dans un état de verrouillage, un verrouillage de l'adaptateur d'outil (200) sur l'interface de fixation (150) de la machine-outil (100) pour le fonctionnement, dans lequel l'unité de verrouillage (202) comprend un corps de verrouillage (300) mobile en rotation, et dans lequel une première position angulaire du corps de verrouillage (300) est associée à l'état de déverrouillage et une deuxième position angulaire du corps de verrouillage (300) est associée à l'état de verrouillage, dans lequel l'unité de verrouillage (202) comprend un organe d'arrêt (400) qui est conçu pour empêcher une rotation du corps de verrouillage (300) de la deuxième position angulaire à la première position angulaire dans l'état de verrouillage, dans lequel l'unité de verrouillage (202) comprend un élément d'actionnement (600) qui est conçu pour permettre une rotation du corps de verrouillage (300) de la première à la deuxième position angulaire, et un organe de blocage (500) est associé à l'élément d'actionnement (600), lequel organe de blocage est conçu pour bloquer l'élément d'actionnement (600) dans l'état de verrouillage dans une position de blocage sur le corps de verrouillage (300), position de blocage dans laquelle l'élément d'actionnement (600) sollicite l'organe d'arrêt (400) au moins dans certaines parties contre l'interface de fixation (150) de la machine-outil manuelle (100), **caractérisé en ce que** l'organe de blocage (500) est réalisé de manière élastique au moins dans certaines régions et comprend une partie de blocage (520) qui, dans la position de blocage, peut être fixée de manière amovible dans un organe de fixation (924) prévu sur le corps de verrouillage (300).

2. Adaptateur d'outil selon la revendication 1, **caractérisé en ce que** l'organe d'arrêt (400) est conçu pour coopérer dans l'état de verrouillage avec un élément d'arrêt (155) associé à l'interface de fixation (150) de la machine-outil manuelle (100).

3. Adaptateur d'outil selon la revendication 2, **caractérisé en ce que** l'organe d'arrêt (155) comprend au moins une denture d'arrêt (156).

4. Adaptateur d'outil selon l'une des revendications précédentes, **caractérisé en ce que** l'organe d'arrêt (400) est réalisé de manière élastique au moins dans certaines régions et comprend au moins une partie d'arrêt (420) qui, dans l'état de verrouillage, est sollicitée par une déformation élastique de l'organe d'arrêt (400) vers l'interface de fixation (150) de la machine-outil manuelle (100).

5. Adaptateur d'outil selon les revendications 3 et 4, **caractérisé en ce que** la partie d'arrêt (420) est conçue pour, dans l'état de verrouillage, s'encliqueter dans la denture d'arrêt (156), afin d'empêcher la rotation du corps de verrouillage (300) de la deuxième position angulaire à la première position angulaire.

6. Adaptateur d'outil selon l'une des revendications précédentes, **caractérisé en ce que** le corps de verrouillage (300) est de forme tubulaire au moins dans certaines parties et l'élément d'actionnement (600) est monté de manière mobile en rotation sur la périphérie extérieure (245) du corps de verrouillage (300).

7. Adaptateur d'outil selon l'une des revendications précédentes, **caractérisé en ce qu'**au moins élément d'entraînement (630) est réalisé sur l'élément d'actionnement (600) et au moins un organe d'entraînement (330) est réalisé sur le corps de verrouillage (300), l'élément d'entraînement (630) et l'organe d'entraînement (330) étant conçus pour coopérer pour l'entraînement en rotation du corps de verrouillage (300) lors d'un actionnement de l'élément d'actionnement (600) pour la rotation du corps de verrouillage (300) de la première à la deuxième position angulaire.

8. Adaptateur d'outil selon la revendication 7, **caractérisé en ce que** l'organe d'entraînement (330) est conçu pour permettre un mouvement rotatif de l'élément d'actionnement (600) par rapport au corps de verrouillage (300) au moins sur un angle de rotation prédéfini (910).

9. Adaptateur d'outil selon l'une des revendications précédentes, **caractérisé en ce que** l'élément d'actionnement (600) est conçu pour solliciter l'organe d'arrêt (400) dans l'état de verrouillage au moins dans certaines parties vers l'interface de fixation (150) de la machine-outil manuelle (100).

10. Adaptateur d'outil selon la revendication 9, **caractérisé en ce que** l'élément d'actionnement (600) comprend une came de commande (650) qui est conçue pour permettre la sollicitation au moins dans certaines parties de l'organe d'arrêt (400) vers l'interface de fixation (150) de la machine-outil manuelle (100) dans l'état de verrouillage.

11. Adaptateur d'outil selon l'une des revendications précédentes, **caractérisé en ce que** l'organe de fixation (924) est réalisé à la manière d'un évidement et la partie de blocage (520) est conçue pour s'encliqueter dans l'organe de fixation (924) dans la position de blocage, afin d'empêcher une rotation automatique de l'élément d'actionnement (600) par rapport au corps de verrouillage (300) dans l'état de verrouillage.

12. Adaptateur d'outil selon l'une des revendications précédentes, **caractérisé en ce que** l'organe d'arrêt (400) et l'organe de blocage (500) sont réalisés d'une seule pièce.

13. Adaptateur d'outil selon l'une des revendications précédentes, **caractérisé en ce que** le corps de verrouillage (300) comprend des éléments de verrouillage (298, 299) qui sont réalisés à la manière de baïonnettes pour la réalisation d'une liaison à baïonnette avec l'interface de fixation (150) de la machine-outil manuelle (100).

14. Système d'outil (300) comportant une machine-outil manuelle (100) qui comprend une interface de fixation (150), et comportant un adaptateur d'outil (200) destiné à être fixé à l'interface de fixation (150) de la machine-outil manuelle (100) selon l'une des revendications 1 à 13.
